# EUROPEAN PATENT SPECIFICATION

(11) **EP 4 131 830 B1**
(45) Date of publication and mention of the grant of the patent: **20.05.2026**
(21) Application number: 21797862.6
(22) Date of filing: 12.04.2021
(51) Int. Cl.: H04L 5/00

(54) **CHANNEL INDICATION METHOD AND RELATED APPARATUS IN WIRELESS LOCAL AREA NETWORK**
KANALANZEIGEVERFAHREN UND ZUGEHÖRIGE VORRICHTUNG IN EINEM DRAHTLOSEN LOKALEN NETZWERK
PROCÉDÉ D'INDICATION DE CANAL ET APPAREIL ASSOCIÉ DANS UN RÉSEAU LOCAL SANS FIL

(30) Priority: 27.04.2020 CN 202010345954
(43) Date of publication of application: 08.02.2023
(73) Proprietor: Huawei Technologies Co., Ltd., Shenzhen, Guangdong 518129 (CN)
(72) Inventor: YANG, Mao, Shaanxi 710072 (CN); LI, Bo, Shaanxi 710072 (CN); YU, Jian, Shenzhen, Guangdong 518129 (CN); GAN, Ming, Shenzhen, Guangdong 518129 (CN); LI, Yunbo, Shenzhen, Guangdong 518129 (CN); GUO, Yuchen, Shenzhen, Guangdong 518129 (CN)
(74) Representative: Grünecker Patent- und Rechtsanwälte PartG mbB
(86) International application number: PCT/CN2021/086451
(87) International publication number: WO 2021/218605

(56) References cited:
- EP-A1- 4 131 828
- CN-A- 109 996 343
- US-A1- 2019 215 884
- US-A1- 2019 230 710
- US-A1- 2019 246 354
- US-A1- 2020 037 288
- ROSS JIAN YU (HUAWEI): "Multi-segment EHT-SIG design discussion", vol. 802.11 EHT; 802.11be, no. 1, 8 April 2020 (2020-04-08), pages 1 - 11, XP068167392, Retrieved from the Internet <URL:https://mentor.ieee.org/802.11/dcn/20/11-20-0545-01-00be-multi-segment-eht-sig-design-discussion.pptx> [retrieved on 20200408]

## Description

### TECHNICAL FIELD

This application relates to the field of wireless communication technologies, and in particular, to a method for indicating a channel in a wireless local area network and a related apparatus.

### BACKGROUND

With development of a wireless local area network (wireless local area network, WLAN) communication standard, a WLAN communication standard develops from IEEE 802.11a/g to current IEEE 802.11ax (referred to as Wi-Fi 6 by the Wi-Fi Alliance, also referred to as the high-efficiency wireless (high-efficiency wireless, HEW) standard) and IEEE 802.11be (referred to as Wi-Fi 7 by the Wi-Fi Alliance, also referred to as the extremely high throughput (extremely high throughput, EHT) standard). An allowed transmission bandwidth and an allowed number of space-time streams thereof also change gradually, from an initial 20 MHz bandwidth to a current 160 MHz bandwidth or even a larger bandwidth, for example, 240 MHz/320 MHz. A WLAN system expects to obtain a higher transmission rate by using a larger bandwidth.

In the IEEE 802.11ax protocol, a signaling part (such as a universal signal field (universal signal field, U-SIG) and an extremely high throughput signal field (EHT signal field, EHT-SIG)) in a high efficiency physical layer protocol data unit (high efficiency PHY protocol data unit, HE PPDU) needs to be repeatedly carried on each 20 MHz channel or every two 20 MHz channels. When a bandwidth supported by a user in the WLAN is expanded from 160 MHz to 320 MHz, as a number of users (or stations) increases, signaling information of multiple users still needs to be repeatedly sent on each 20 MHz channel or every two 20 MHz channels. This causes an excessive amount of repeated signaling, high signaling overheads, and low transmission efficiency. Therefore, the IEEE 802.11be protocol proposes a multi-segment extremely high throughput signaling field (multi-segment EHT-SIG) transmission mechanism. To be specific, an entire large bandwidth (for example, 320 MHz) is divided into several segments (segment). For example, each 80 MHz is used as a segment, and 320 MHz may be divided into four segments. Each segment transmits only signaling information of a user parking (park) on the segment. In other words, in the multi-segment (or multi-segment) EHT-SIG transmission mechanism, when the large bandwidth (for example, 160 MHz, 240 MHz, and 320 MHz) is used for transmission, different U-SIGs and EHT-SIGs are used in a unit of 80 MHz. Therefore, a non-access point station (non-AP Station, non-AP STA, STA for short) parking on a specific 80 MHz channel only needs to receive a corresponding EHT-SIG on the 80 MHz channel, to obtain resource allocation information. This reduces preamble (preamble) overheads.

However, how to enable different STAs to park on different frequency segments to support the multi-segment EHT-SIG transmission mechanism, to reduce preamble overheads becomes an urgent problem to be resolved.

US20190215884A1 describes methods, systems, and devices for wireless communication that support a 20 MHz station (STA) parked on a secondary channel. Considerations for providing information to STAs parked on a secondary channel are discussed. In some examples, an AP may restrict resource unit allocation to the secondary channel on which the STA is parked. In some cases, a trigger-based random access mechanism may limit access to certain resource units to STAs on a given secondary channel.

US2020037288A1 describes embodiments of a station (STA) and method of communication. The STA may be included in a first plurality of STAs affiliated with a first multi-link logical entity (MLLE). A plurality of links may be established between the first MLLE and a second MLLE, wherein the second MLLE may be affiliated with a second plurality of STAs. The STA may receive a first subset of a sequence of MAC protocol data units (MPDUs). A second subset of the sequence of MPDUs may be transmitted by another STA of the first plurality of STAs.

The document by ROSS JIAN YU (HUAWEI), "Multi-segment EHT-SIG design discussion", vol. 802.11 EHT; 802.11be, no. 1, XP068167392, discusses contributions on multi-segment (per 80MHz) EHT-SIG design.

US2019246354A1 describes embodiments of a high efficiency subchannel selective transmission (HE SST) access point (AP) and an HE SST station (STA). The HE SST AP may determine a temporary primary channel for an HE SST STA. The HE SST AP may communicate with the HE SST STA in a plurality of channels that includes the temporary primary channel and further includes a primary channel. The HE SST AP may determine trigger-enabled target wake time service periods (TWT SPs) for exchange of frames between the HE SST AP and the HE SST STA on the temporary primary channel. The trigger-enabled TWT SPs may be determined to not overlap with target beacon transmission times (TBTTs) at which beacon frames that include delivery traffic indication maps (DTIMs) are to be sent on the primary channel by the HE SST AP.

### SUMMARY

The invention is set out in the appended claims.

Embodiments of this application provide a method for indicating a channel in a wireless local area network and a related apparatus, so that different STAs can park on different frequency segments. This supports a multi-segment EHT-SIG transmission mechanism, reduces preamble overheads, and improves transmission efficiency.

According to a first aspect, an embodiment of this application provides a method for indicating a channel in a wireless local area network according to claim 1. The method includes: An access point generates a media access control MAC frame carrying channel indication information, where the channel indication information indicates locations of a parking channel and a temporary primary channel of one or more stations. The access point sends the MAC frame to the one or more stations.

The parking channel may be an 80 MHz channel through which a receive end receives signaling information for the receive end in a data transmission process. The temporary primary channel may be a 20 MHz channel in the parking channel whose bandwidth is 80 MHz. Therefore, the parking channel includes the temporary primary channel.

With reference to the first aspect, in a possible design, the method further includes: The access point sends a PPDU, where the PPDU carries signaling information of the one or more stations, and the signaling information of the one or more stations is carried on the parking channel. The signaling information may be a U-SIG and an EHT-SIG.

In this embodiment of this application, parking channels are allocated to different stations by using channel indication information, so that a station that receives the channel indication information can park on an allocated parking channel. Therefore, the STA can receive the EHT-SIG through the parking channel, and obtain resource allocation information from the received EHT-SIG. This reduces preamble overheads and improves transmission efficiency. On the other hand, a rule for transmitting data by a transmit end in the WLAN is: Only when a primary 20 MHz channel is idle and can transmit data, whether another channel (for example, a secondary 20 MHz channel, a secondary 40 MHz channel, or a secondary 80 MHz channel) is idle and can transmit data is further analyzed. Therefore, in this embodiment of this application, the channel indication information further indicates a temporary primary channel of different stations on a parking channel, so that when data is transmitted through the parking channel, there must be data being transmitted through the temporary primary channel. In this way, if a part of 20 MHz channels in the parking channel are unavailable (for example, occupied or interfered), and consequently available channels are noncontiguous, a STA can also receive a data packet. In other words, preamble puncture transmission in a multi-segment EHT-SIG transmission mechanism is implemented.

According to a second aspect, an embodiment of this application provides another method for indicating a channel in a wireless local area network according to claim 3. The method includes: A first station receives a MAC frame from an access point, and parses the MAC frame, to obtain channel indication information included in the MAC frame.

The channel indication information indicates locations of a parking channel and a temporary primary channel of one or more stations. The first station is any station in the one or more stations. The parking channel includes the temporary primary channel, a bandwidth of the parking channel is 80 MHz, and a bandwidth of the temporary primary channel is 20 MHz.

With reference to the second aspect, in a possible design, the method further includes: The station receives a PPDU from the access point, where the PPDU carries signaling information of the one or more stations, and the signaling information of the one or more stations is carried on the parking channel. The signaling information may be a U-SIG and an EHT-SIG.

According to a third aspect, an apparatus for indicating a channel in a wireless local area network is provided. The apparatus may be applied to an access point AP, and the apparatus may be the access point or a chip in the access point, for example, a Wi-Fi chip. The apparatus includes:
a processing unit, configured to generate a MAC frame carrying channel indication information, where the channel indication information indicates locations of a parking channel and a temporary primary channel of one or more stations; and a transceiver unit, configured to send the MAC frame to the one or more stations. The parking channel includes the temporary primary channel, a bandwidth of the parking channel is 80 MHz, and a bandwidth of the temporary primary channel is 20 MHz.

With reference to the third aspect, in a possible design, the transceiver unit is further configured to send a PPDU, where the PPDU carries signaling information of the one or more stations, and the signaling information of the one or more stations is carried on the parking channel. The signaling information may be a U-SIG and an EHT-SIG.

According to a fourth aspect, a channel indication apparatus in a wireless local area network is provided. The apparatus is applied to a station STA, and the apparatus may be the station or a chip in the station, for example, a Wi-Fi chip. The apparatus includes:
a transceiver unit, configured to receive a MAC frame from an access point, where the MAC frame includes channel indication information, and the channel indication information indicates locations of a parking channel and a temporary primary channel of one or more stations; and a processing unit, configured to parse the received MAC frame, to obtain locations that are of a parking channel and a temporary primary channel of a first station and that are indicated by the channel indication information.

The first station is any station in the one or more stations. The parking channel includes the temporary primary channel, a bandwidth of the parking channel is 80 MHz, and a bandwidth of the temporary primary channel is 20 MHz.

With reference to the fourth aspect, in a possible design, the transceiver unit is further configured to receive a PPDU from the access point, where the PPDU carries signaling information of the one or more stations, and the signaling information of the one or more stations is carried on the parking channel. The signaling information may be a U-SIG and an EHT-SIG.

In an implementation of any one of the foregoing aspects, an operating bandwidth of the station may be 20 MHz, 40 MHz, 80 MHz, 160 MHz, 240 MHz, or 320 MHz. It may be understood that when the operating bandwidth of the station is greater than 160 MHz, for example, is 240 MHz or 320 MHz, a channel in the wireless local area network may be in a form of frequency segment. It may be further understood that the method for indicating a channel in this embodiment of this application is applicable to the IEEE 802.11be protocol. If the station is applicable to the IEEE 802.11be protocol, the operating bandwidth of the station may be 240 MHz or 320 MHz.

In an implementation of any one of the foregoing aspects, the channel indication information may include a temporary primary channel location field, and the temporary primary channel location field may indicate the location of the temporary primary channel of the station. Optionally, according to preset channel division, a location of an 80 MHz channel on which the temporary primary channel is located may be the location of the parking channel.

The channel indication information may include 8 bits, and the temporary primary channel location field may include 2 bits. Optionally, the temporary primary channel location field may further include 4 bits. When the temporary primary channel location field includes 4 bits, the temporary primary channel location field may directly indicate that the temporary primary channel is which 20 MHz channel obtained through preset channel division (it is assumed that 320 MHz is divided into 16 20 MHz channels).

Optionally, temporary primary channels of STAs parking on a same parking channel may be different or may be the same. For example, parking channels of a STA 1, a STA 2, and a STA 3 are the same. A temporary primary channel of the STA 1 may be a first 20 MHz channel in the parking channel, a temporary primary channel of the STA 2 may be a third 20 MHz channel in the parking channel, and a temporary primary channel of the STA 3 may be a second 20 MHz channel in the parking channel. For another example, temporary primary channels of the STA 2 and the STA 3 are both a second 20 MHz channel in the parking channel, and a temporary primary channel of the STA 1 may be a first 20 MHz channel in the parking channel.

In this embodiment of this application, the temporary primary channel location field indicates a temporary primary channel in a parking channel of different STAs, so that when data is transmitted through the parking channel, there must be data being transmitted through the temporary primary channel. In this way, if a part of channels in the parking channel are unavailable (for example, occupied or interfered), and consequently available channels are noncontiguous, two communication parties can still transmit data through another available channel. This improves channel utilization and flexibility.

In an implementation of any one of the foregoing aspects, the channel indication information may further include a parking channel location field, and the parking channel location field may indicate the location of the parking channel of the station. The channel indication information may include 8 bits, and the parking channel location field may include 2 bits. Optionally, the temporary primary channel location field may include 2 bits.

In an implementation of any one of the foregoing aspects, the channel indication information may further include an operating bandwidth indication field, and the operating bandwidth indication field may indicate an operating bandwidth of the station. Specifically, the operating bandwidth indication field may indicate a size of the operating bandwidth of the station.

Optionally, an operating channel may be determined based on the location of the parking channel and/or the location of the temporary primary channel, and the size of the operating bandwidth.

The channel indication information may include 8 bits, and the operating bandwidth indication field may include 2 bits. Optionally, the temporary primary channel location field may include 2 bits, and the parking channel location field may include 2 bits.

In this embodiment of this application, the operating bandwidth is directly indicated in the channel indication information, and there is no need to use other signaling to indicate the operating bandwidth. This can reduce signaling overheads.

In an implementation of any one of the foregoing aspects, the channel indication information may further include an association identifier of the one or more stations.

In this embodiment of this application, the locations of the parking channel and the temporary primary channel of the one or more stations are simultaneously indicated by using the association identifier of the one or more stations, so that the parking channel and the temporary primary channel of the multiple STAs can be indicated in one interaction, and transmission efficiency is higher.

In an implementation of any one of the foregoing aspects, the MAC frame may further include a channel information present indication, and the channel information present indication may indicate whether the channel indication information exists in the MAC frame.

In this embodiment of this application, whether the MAC frame is applicable to the IEEE802.11be protocol is distinguished by using the channel information present indication.

In an implementation of any one of the foregoing aspects, the MAC frame is a TWT request frame, a TWT response frame, or a TWT setup frame, and the channel indication information may be carried in a TWT element in the MAC frame.

In this embodiment of this application, the channel indication information is carried in the TWT element, to indicate a parking channel and a temporary primary channel with larger bandwidths (for example, 240 MHz and 320 MHz) in a subchannel selective transmission mechanism through TWT negotiation.

In any one of the foregoing aspects, the MAC frame is a MU-RTS frame.

According to a fifth aspect, an embodiment of this application provides a communication apparatus. The apparatus is specifically an access point (AP). The access point has a function of implementing behavior of the access point in the foregoing method designs. The function may be implemented by hardware, or may be implemented by hardware executing corresponding software. The hardware or the software includes one or more modules corresponding to the foregoing function.

In a possible design, the access point AP includes a processor and a transceiver. The processor is configured to support the access point in performing the corresponding functions in the foregoing methods. The transceiver is configured to support communication between the access point and a STA, and send information, a data packet, or an instruction in the foregoing method to the STA. The access point may further include a memory. The memory is coupled to the processor and store program instructions and data that are necessary for the access point.

According to a sixth aspect, an embodiment of this application provides a station. The station has a function of implementing behavior of the STA in the foregoing method designs. The function may be implemented by hardware, or may be implemented by hardware executing corresponding software. The hardware or the software includes one or more modules corresponding to the function. The module may be software and/or hardware.

In a possible design, a structure of the station includes a transceiver and a processor. The transceiver is configured to support communication between the STA and an access point AP. The station may further include a memory. The memory is coupled to the processor and store program instructions and data that are necessary for the station.

According to a seventh aspect, an embodiment of this application provides a wireless communication system. The system includes the access point according to the fifth aspect and the STA according to the sixth aspect.

According to an eighth aspect, an embodiment of this application provides a chip or a chip system, including an input/output interface and a processing circuit, where the input/output interface is used for information or data exchange, and the processing circuit is configured to run instructions, so that an apparatus mounted in the chip or the chip system performs the method for indicating a channel in any one of the foregoing aspects.

According to a ninth aspect, this application provides a computer-readable storage medium. The computer-readable storage medium stores instructions, and the instructions may be executed by one or more processors on a processing circuit. When the computer-readable storage medium is run on a computer, the computer is enabled to perform the method for indicating a channel according to the aspect.

According to a tenth aspect, this application provides a computer program product that includes instructions, and when the product is run on a computer, the computer is enabled to perform the method for indicating a channel in the foregoing aspect.

According to an eleventh aspect, this application provides a chip system. The chip system includes a processor, configured to support an apparatus mounted in the chip system in implementing the method for indicating a channel in any one of the foregoing aspects, for example, generating or processing data and/or information in the foregoing method for indicating a channel. In a possible design, the chip system further includes a memory. The memory is configured to store program instructions and data that are necessary for a data sending device. The chip system may include a chip, or may include a chip and another discrete component.

In this embodiment of this application, different STAs can park on different frequency segments. This supports a multi-segment EHT-SIG transmission mechanism, reduces preamble overheads, and improves transmission efficiency.

### BRIEF DESCRIPTION OF DRAWINGS

FIG. 1a is a schematic diagram of channel distribution in a 160 MHz bandwidth;
FIG. 1b is a schematic diagram of channel distribution in a 320 MHz bandwidth;
FIG. 2 is a schematic diagram of a structure of a signaling part of a PPDU in IEEE 802.11be;
FIG. 3 is a schematic diagram of an architecture of a wireless communication system according to an embodiment of this application;
FIG. 4a is a schematic diagram of completing an SST indication through individual TWT interaction in IEEE 802.11ax;
FIG. 4b is a schematic diagram of an individual TWT element field in IEEE 802.11ax;
FIG. 5 is a first schematic flowchart of a method for indicating a channel in a wireless local area network according to an embodiment of this application;
FIG. 6 is a second schematic flowchart of a method for indicating a channel in a wireless local area network according to an embodiment of this application;
FIG. 7a is a first schematic diagram of an enhanced TWT channel field according to an embodiment of this application;
FIG. 7b is a second schematic diagram of an enhanced TWT channel field according to an embodiment of this application;
FIG. 7c is a third schematic diagram of an enhanced TWT channel field according to an embodiment of this application;
FIG. 7d is a fourth schematic diagram of an enhanced TWT channel field according to an embodiment of this application;
FIG. 7e is a fifth schematic diagram of an enhanced TWT channel field according to an embodiment of this application;
FIG. 8a is a first schematic diagram of a TWT element field in a TWT frame according to an embodiment of this application;
FIG. 8b is a second schematic diagram of a TWT element field in a TWT frame according to an embodiment of this application;
FIG. 8c is a third schematic diagram of a TWT element field in a TWT frame according to an embodiment of this application;
FIG. 9 is a third schematic flowchart of a method for indicating a channel in a wireless local area network according to an embodiment of this application;
FIG. 10 is a schematic diagram of interaction between a STA and an AP based on a channel switch element according to an embodiment of this application;
FIG. 11 is a schematic diagram of a channel switch element field according to an embodiment of this application;
FIG. 12 is a fourth schematic flowchart of a method for indicating a channel in a wireless local area network according to an embodiment of this application;
FIG. 13 is a schematic diagram of an enhanced A-control field according to an embodiment of this application;
FIG. 14 is a fifth schematic flowchart of a method for indicating a channel in a wireless local area network according to an embodiment of this application;
FIG. 15a is a schematic diagram of interaction between a GCR MU-BAR frame and a GCR BA frame according to an embodiment of this application;
FIG. 15b is a schematic diagram of interaction between a trigger frame and a TWT response frame according to an embodiment of this application;
FIG. 16a is a schematic diagram of a broadcast TWT element field according to an embodiment of this application;
FIG. 16b is a schematic diagram of a TWT element field according to an embodiment of this application;
FIG. 17 is a sixth schematic flowchart of a method for indicating a channel in a wireless local area network according to an embodiment of this application;
FIG. 18 is a schematic diagram of interaction between a MU-RTS frame and a CTS frame according to an embodiment of this application;
FIG. 19a is a schematic diagram of a common information field in a MU-RTS frame according to an embodiment of this application;
FIG. 19b is a first schematic diagram of a user information field in a MU-RTS frame according to an embodiment of this application;
FIG. 19c is a second schematic diagram of a user information field in a MU-RTS frame according to an embodiment of this application;
FIG. 20 is a seventh schematic flowchart of a method for indicating a channel in a wireless local area network according to an embodiment of this application;
FIG. 21 is a schematic diagram of interaction between a first trigger frame and a response frame according to an embodiment of this application;
FIG. 22 is a schematic diagram of a common information field in a first trigger frame according to an embodiment of this application;
FIG. 23a is a first schematic diagram of a user information field in a first trigger frame according to an embodiment of this application;
FIG. 23b is a second schematic diagram of a user information field in a first trigger frame according to an embodiment of this application;
FIG. 24 is a schematic diagram of a multi-segment EHT-SIG information element field according to an embodiment of this application;
FIG. 25 is a schematic flowchart of a method for indicating puncture information according to an embodiment of this application;
FIG. 26a is a first schematic diagram of puncture information according to an embodiment of this application;
FIG. 26b is a second schematic diagram of puncture information according to an embodiment of this application;
FIG. 27 is a schematic diagram of a structure of a communication apparatus according to an embodiment of this application;
FIG. 28 is another schematic diagram of a structure of a communication apparatus according to an embodiment of this application; and
FIG. 29 is a schematic diagram of a structure of an apparatus for indicating a channel according to an embodiment of this application.

### DESCRIPTION OF EMBODIMENTS

The following clearly and completely describes the technical solutions in embodiments of this application with reference to the accompanying drawings in embodiments of this application.

To facilitate understanding of the technical solutions in embodiments of this application, the following briefly describes meanings of various channels in embodiments of this application.

### 1. Primary 20 MHz channel (P20 channel)

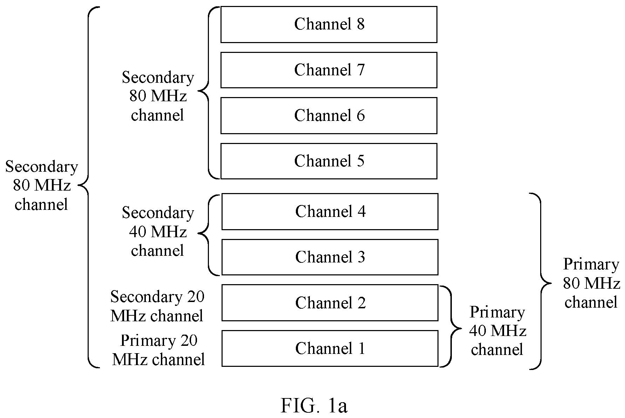

In a WLAN, channels are usually classified into a primary channel and a secondary channel, and the secondary channel may include one or more subchannels. In an example, if classification is performed by using 20 MHz as a basic bandwidth unit, when a channel bandwidth is 20 MHz, there is only one primary channel whose bandwidth is 20 MHz. When a channel bandwidth is greater than 20 MHz, one channel whose bandwidth is 20 MHz is a primary channel, and one or more other 20 MHz channels are secondary channels. FIG. 1a is a schematic diagram of channel distribution in a 160 MHz bandwidth. As shown in FIG. 1a, the 160 MHz bandwidth includes a primary 80 MHz channel and a secondary 80 MHz channel. Channels in the 160 MHz bandwidth are sequentially numbered as a channel 1 to a channel 8, and each number represents one 20 MHz channel. The channel 1 represents a primary 20 MHz channel (primary 20 MHz channel, P20 for short). and the channel 2 represents a secondary 20 MHz channel (secondary 20 MHz channel, S20 for short). One primary 40 MHz channel (primary 40 MHz channel, P40 for short) includes one primary 20 MHz channel and one secondary 20 MHz channel, namely, the channel 1 and the channel 2. One secondary 40 MHz channel (secondary 40 MHz channel, S40 for short) includes two 20 MHz subchannels whose bandwidth is 20 MHz, which are the channel 3 and the channel 4. One primary 80 MHz channel (primary 80 MHz channel, P80 for short) includes one primary 40 MHz channel and one secondary 40 MHz channel, namely, the channel 1 to the channel 4. One secondary 80 MHz channel (secondary 80 MHz channel, S80 for short) includes four 20 MHz subchannels whose bandwidth is 20 MHz, which are the channels 5, 6, 7, and 8. The channels 1 and 2, the channels 2 and 3, the channels 3 and 4, channels 5 and 6, the channels 6 and 7, and the channels 7 and 8 each are adjacent.

It may be understood that the primary channel is a common channel of operation for stations that are members of a basic service set (The common channel of operation for stations (STAs) that are members of the basic service set (BSS)). A station in the basic service set may perform channel contention on the primary channel, to preempt a channel resource. For example, multiple stations, a STA 1, a STA 2, and a STA 3, or an access point in the basic service set may perform channel contention on the channel 1 in FIG. 1a, to preempt a channel resource.

It may be understood that one primary 80 MHz channel means that a bandwidth of the primary channel is 80 MHz, and one secondary 80 MHz channel means that a bandwidth of the secondary channel is 80 MHz. In this embodiment of this application, the secondary channel may also be referred to as a second channel, and the secondary 80 MHz channel may also be referred to as a second 80 MHz channel.

In an example, an arrangement manner of the channels 1 to 8 may be shown in FIG. 1a, or may be another arrangement manner. This is not limited in this application. For ease of description, in channel division in the WLAN in all embodiments of this application, the channel 1 is a primary 20 MHz channel. It may be understood that an 802.11 system supports channel bandwidths of different sizes, and the channel may have contiguous bandwidths of 20 MHz, 40 MHz, 80 MHz, and 160 MHz, or 80 MHz+80 MHz bandwidths that are noncontiguous, or 320 MHz, 240 MHz+80 MHz, 160 MHz+160 MHz, or the like. In a next-generation 802.11 standard, the channel bandwidth may further be another bandwidth. Optionally, a channel division method thereof may be similar to that of the foregoing 160 MHz channel, and details are not described herein again.

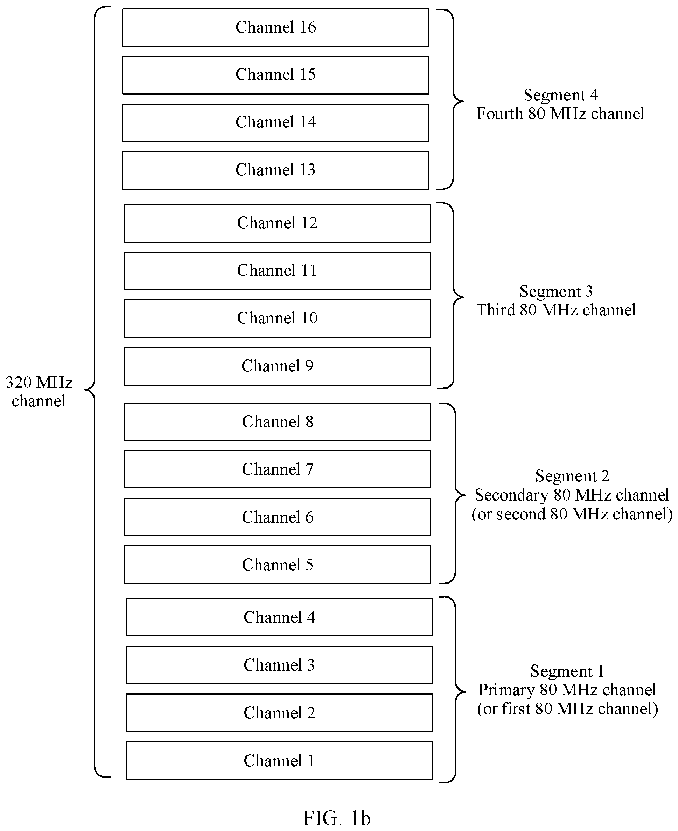

Optionally, in the WLAN, a contiguous block of spectrum used for transmission may be referred to as a frequency segment (frequency segment). One WLAN channel may include one or more frequency segments, and a bandwidth of each frequency segment may be 80 MHz, 40 MHz, 20 MHz, or 160 MHz. For example, a bandwidth of a segment is 80 MHz. FIG. 1b is a schematic diagram of channel distribution in a 320 MHz bandwidth. As shown in FIG. 1b, a 320 MHz channel shown in FIG. 1b may be divided into four segments. The frequency segment may alternatively be referred to as a frequency segment, or referred to as a segment for short. 320 MHz channels are sequentially numbered as a channel 1 to a channel 16, and each number represents one 20 MHz channel.

### 2. Parking (park) channel, temporary primary channel, and operating channel

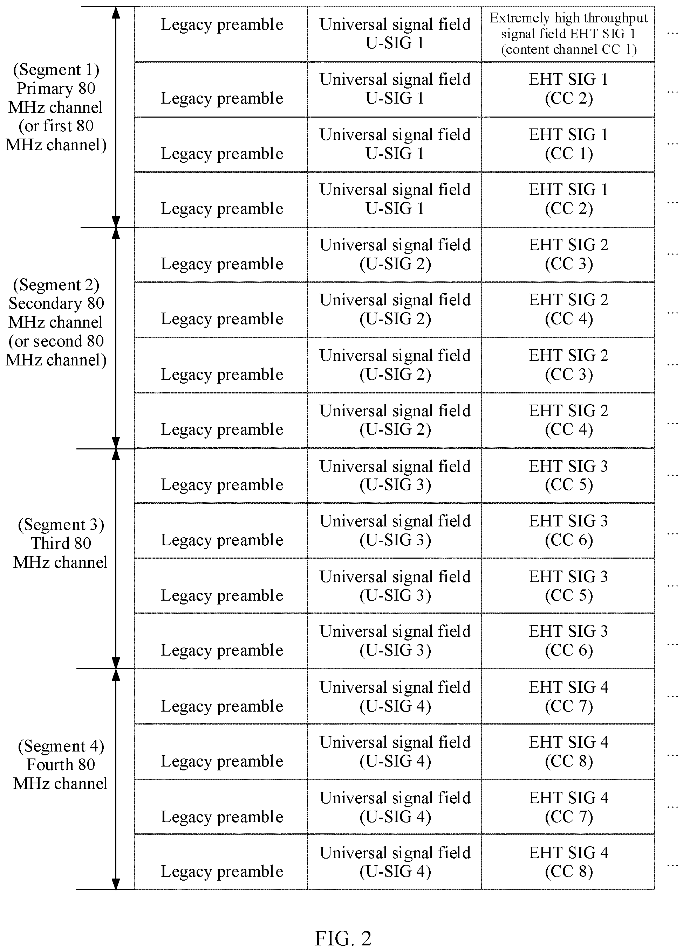

In the IEEE 802.11ax protocol, a signaling part in a high efficiency physical layer protocol data unit (high efficiency PHY protocol data unit, HE PPDU) needs to be repeatedly carried on each 20 MHz channel or every two 20 MHz channels. When a bandwidth supported by a user in the WLAN is expanded from 160 MHz to 320 MHz, as a number of users (or stations) increases, signaling information of multiple users still needs to be repeatedly sent on each 20 MHz channel. This causes an excessive amount of repeated signaling, high signaling overheads, and low transmission efficiency. To improve transmission efficiency and reduce signaling overheads, an improvement idea is as follows: FIG. 2 is a schematic diagram of a structure of a signaling part of a PPDU in IEEE 802.11be. As shown in FIG. 2, an entire large bandwidth (for example, 320 MHz) is divided into several segments (segment), and each segment transmits only signaling information of a user parking (park) on the segment. For example, a U-SIG in an extremely high throughput physical layer protocol data unit (EHT PPDU) includes a universal signaling field (universal signal field, U-SIG) U-SIG 1 repeatedly carried in four 20 MHz on a first segment. An EHT-SIG of the EHT PPDU includes two content channels (content channel) CC 1 and CC 2 that send an extremely high throughput signaling field (EHT signal field, EHT-SIG) EHT-SIG 1 in the first segment. The U-SIG 1 and the EHT-SIG 1 include a transmission parameter required for parsing the EHT PPDU by a station parking on the first segment. Similarly, the U-SIG in the EHT PPDU includes a U-SIG 2 sent in a second segment, and the EHT-SIG in the EHT-PPDU includes an EHT-SIG 2 sent in the second segment. The U-SIG 2 and the EHT-SIG 2 include a transmission parameter required for parsing the EHT PPDU by a station parking on the second segment. It can be learned that the U-SIG in the EHT PPDU does not need to be repeatedly sent on each 20 MHz channel in the entire 320 MHz bandwidth, and the EHT-SIG in the EHT PPDU does not need to repeatedly send two content channels of the EHT-SIG on 320 MHz either. This greatly reduces signaling overheads, shortens a number of symbols occupied by the signaling part, and improves transmission efficiency. The STA parking on the first segment may parse the CC 1 and the CC 2 of the U-SIG 1 and the EHT-SIG 1, to obtain data of the STA. The STA parking on the second segment may parse a CC 1 and a CC 2 of the U-SIG 2 and the EHT-SIG 2, to obtain data of the STA.

For example, a STA 1, a STA 2, a STA 3, and a STA 4 separately park on four segments. The STA 1 parks on a segment 1 (Segment 1), the STA 2 parks on a segment 2 (Segment 2), the STA 3 parks on a segment 3 (Segment 3), and the STA 4 parks on a segment 4 (Segment 4). In this case, an AP only needs to send signaling information of the STA 1 on the segment 1, send signaling information of the STA 2 on the segment 2, send signaling information of the STA 3 on the segment 3, and send signaling information of the STA 4 on the segment 4. The AP does not need to send the signaling information of the STA 1 to the STA 4 on each of the segment 1 to the segment 4. This reduces signaling overheads and improves transmission efficiency.

Therefore, to implement that each segment only transmits signaling information of a user parking (park) on the segment, the AP needs to know each STA parks on (park on) or operates on which segment, and each STA also needs to know a parking channel of the STA is in which segment in a bandwidth.

In this application, a parking (park) channel may be an 80 MHz channel through which a receive end receives signaling information for the receive end in a data transmission process, for example, an 80 MHz channel through which a U-SIG and/or an EHT-SIG are/is received. It may be understood that the parking channel mentioned in this application is defined in a case of 80 MHz segmentation. For a parking channel in a case of 40 MHz segmentation, a case of 20 MHz segmentation, or a case of 160 MHz segmentation, refer to a definition of the parking channel in the case of 80 MHz segmentation. Details are not described herein again. For ease of description, all the following embodiments are described by using 80 MHz segmentation as an example.

In this application, the temporary primary channel may be a specific 20 MHz channel in a parking channel whose bandwidth is 80 MHz. Specifically, the temporary primary channel is temporarily used as a common channel of operation for stations that are members parking on a parking channel in a basic service set. A station parking on a specific 80 MHz parking channel performs packet detection or listening on the temporary primary channel. In other words, the temporary primary channel may be a channel used for packet detection or channel listening in the parking channel. Optionally, a rule for transmitting data by a transmit end is: Only when the temporary primary channel is idle and available, whether another channel is idle and available is further analyzed. Therefore, in a data transmission process of the 80 MHz parking channel, there must be data being transmitted through the temporary primary channel in the 80 MHz parking channel. Otherwise, data cannot be transmitted through the 80 MHz parking channel. Optionally, the temporary primary channel may also be referred to as a temporary channel, a temporary primary 20 MHz channel, or the like. A name of the temporary primary channel is not limited in embodiments of this application.

In this application, the operating channel may refer to all 20 MHz channels that may transmit data in a data transmission process.

It should be noted that "data transmission" and "data transmission" in embodiments of this application generally refer to communication. "Data" generally refers to communication information, is not limited to data information, and may also be signaling information or the like.

The foregoing content briefly describes meanings of various channels in embodiments of this application. For ease of understanding a method for indicating a channel in a wireless local area network provided in embodiments of this application, the following describes a system architecture and an application scenario of the method for indicating a channel in the wireless local area network provided in embodiments of this application. It may be understood that scenarios described in embodiments of this application are intended to describe the technical solutions in embodiments of this application more clearly, and do not constitute a limitation on the technical solutions provided in embodiments of this application.

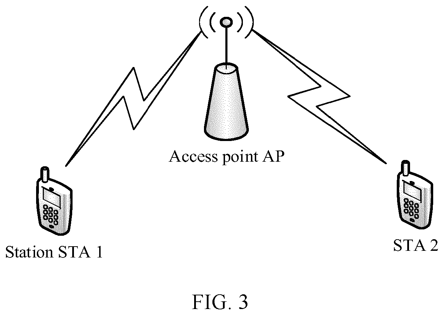

An embodiment of this application provides a method for indicating a channel in a wireless local area network. The method may be applied to a wireless communication system, for example, a cellular network or a wireless local area network system. FIG. 3 is a schematic diagram of an architecture of a wireless communication system according to an embodiment of this application. As shown in FIG. 3, the wireless communication system may include an AP and one or more STAs (for example, a STA 1 and a STA 2 in FIG. 3). The AP and the STAs support a WLAN communication protocol. The communication protocol may include the IEEE 802.11be (or referred to as Wi-Fi 7, EHT protocol), and may further include protocols such as the IEEE 802.11ax and the IEEE 802.11ac. Certainly, the communication protocol may further include a next-generation protocol of IEEE 802.11be and the like with continuous evolution and development of communication technologies. A WLAN is used as an example. An apparatus for implementing the method in this application may be an AP or a STA in the WLAN, or a chip or a processing system disposed in the AP or the STA.

The access point (AP) is an apparatus having a wireless communication function, supports communication by using a WLAN protocol, has a function of communicating with another device (for example, a station or another access point) in a WLAN network, and certainly, may further have a function of communicating with another device. In a WLAN system, an access point may be referred to as an access point station (AP STA). The apparatus having the wireless communication function may be an entire device, or may be a chip or a processing system installed in the entire device. The device in which the chip or the processing system is installed may implement the method and the function in embodiments of this application under control of the chip or the processing system. The AP in embodiments of this application is an apparatus providing a service for a STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and function in embodiments of this application.

A station (for example, a STA 1 in FIG. 3) is an apparatus having a wireless communication function, supports communication by using a WLAN protocol, and has a capability of communicating with another station or an access point in a WLAN network. In the WLAN system, a station may be referred to as a non-access point station (non-access point station, non-AP STA). For example, the STA is any user communication device that allows a user to communicate with an AP and further communicate with a WLAN. The apparatus having a wireless communication function may be an entire device, or may be a chip or a processing system installed in the entire device. The device in which the chip or the processing system is disposed may implement the method and the function in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone. Alternatively, the STA may be an internet of things node in the internet of things, an in-vehicle communication apparatus in the internet of vehicles, an entertainment device, a game device or system, a global locationing system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (such as an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, an AR, a VR, or another wearable device), a smart device in smart office (for example, a printer, a projector, a loudspeaker, or a stereo), an internet of vehicle device in the internet of vehicle, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not specifically limited in embodiments of this application, and are merely examples for description herein.

Optionally, FIG. 3 is merely a schematic diagram. In addition to a scenario in which the AP communicates with one or more STAs, the method for indicating a channel in the wireless local area network provided in embodiments of this application may be further applied to a scenario in which the AP communicates with another AP, and is also applicable to a scenario in which a STA communicates with a STA.

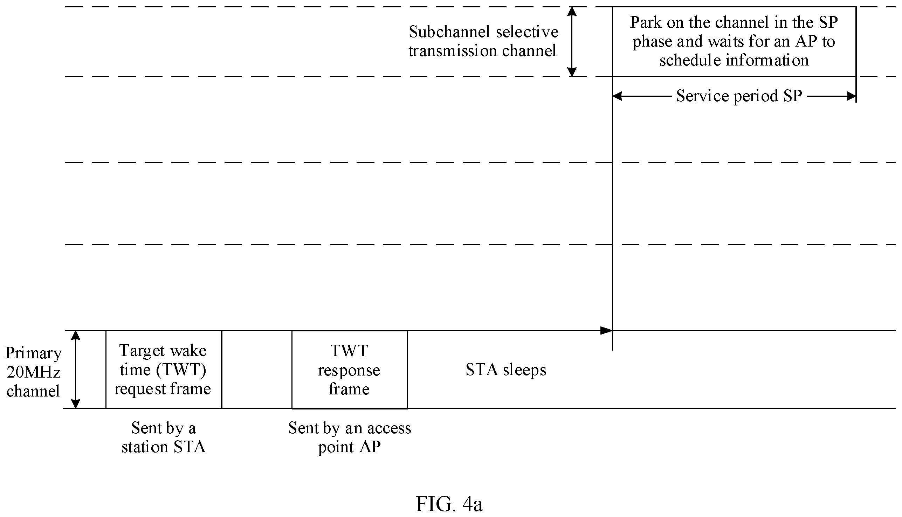

In the wireless communication system shown in FIG. 3, the access point (Access Point, AP) and a STA may enable, by using a target wake time (Target Wake Time, TWT) negotiation mechanism, the STA to temporarily switch to another 20 MHz or 80 MHz channel in a specific service period (service period), to perform listening and obtain a service of the AP. In short, the AP and the STA (any STA in FIG. 3) may implement channel switching in a specific service period by using the TWT negotiation mechanism, namely, a subchannel selective transmission (Subchannel Selective Transmission, SST) mechanism. FIG. 4a is a schematic diagram of completing an SST indication through individual TWT interaction in IEEE 802.11ax. As shown in FIG. 4a, an example in which a STA is a requester and an AP is a responder is used. The STA sends an individual TWT (individual TWT) request frame to the AP, to request to set up an individual TWT SP. After receiving the TWT request frame sent by the STA, the AP may return a TWT response frame to the STA. The TWT response frame may be used for accepting the TWT request, providing another TWT parameter, or opposing the TWT request. If TWT is successfully set up between the STA and the AP, the STA may enter a sleep state, and switch to a corresponding SST channel to wait for scheduling by the AP when the TWT SP is reached. The TWT request frame carries a TWT element field, the TWT element field includes a TWT parameter information field (TWT parameter information), and the TWT parameter information field includes a TWT channel field (TWT channel).

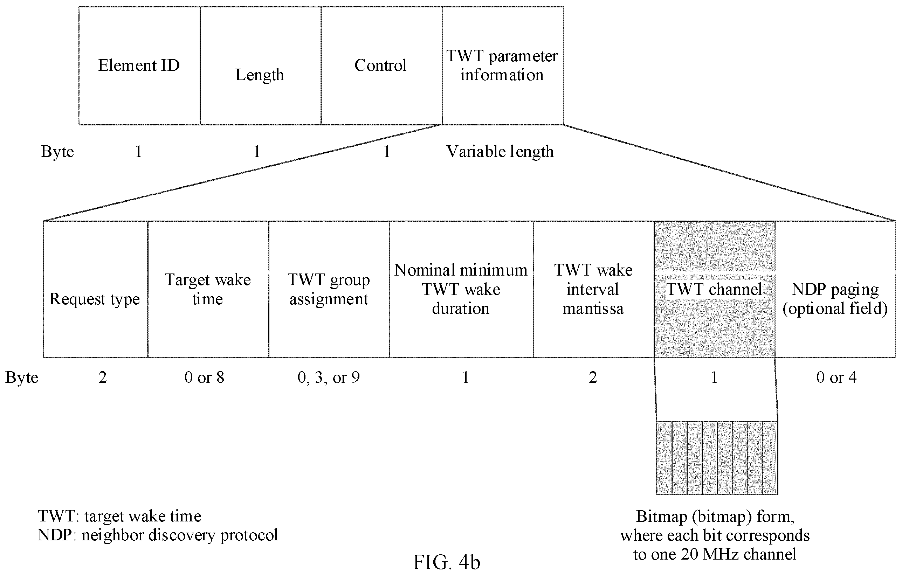

FIG. 4b is a schematic diagram of an individual TWT element field in IEEE 802.11ax. As shown in FIG. 4b, the TWT element field includes an element identifier field, a length field, a control field, and a TWT parameter information field. The TWT parameter information field includes a request type, a target wake time, TWT group allocation, nominal minimum TWT wake duration, a TWT wake interval mantissa, a TWT channel field, and neighbor discovery protocol (neighbor discovery protocol, NDP) paging (optional field). The TWT channel field includes 8 bits, the 8 bits form a bitmap (bitmap), and each bit in the bitmap corresponds to one 20 MHz channel. Therefore, the TWT channel field may indicate a maximum of eight different 20 MHz channels, and support a channel indication in a maximum bandwidth of 160 MHz. For a STA in a 20 MHz operating mode, if a bit in the TWT channel field is set to 1, it indicates that the STA requests to operate, in an SP indicated by the TWT element field, on a 20 MHz channel corresponding to the bit that is set to 1. If 4 least significant bits or 4 most significant bits of the TWT channel field are all set to 1, it indicates that an operating channel of the STA in the SP is low 80 MHz or high 80 MHz.

It can be learned from the TWT channel field in IEEE 802.11ax that, in one aspect, because the TWT channel field in IEEE 802.11ax is an 8-bit bitmap, the SST mechanism in IEEE 802.11ax supports a channel indication in a maximum bandwidth of 160 MHz, and is not applicable to a channel indication in a larger bandwidth (for example, 240 MHz or 320 MHz) in IEEE 802.11be. In another aspect, IEEE 802.11be wants to support a multi-segment EHT-SIG transmission mechanism to reduce preamble overheads, but a method for indicating a channel in the IEEE 802.11ax protocol is not applicable to the IEEE 802.11be protocol. Therefore, a STA operating in a larger bandwidth (for example, 240 MHz or 320 MHz) cannot learn that the STA parks on which 80 MHz channel. As a result, different STAs cannot park on different frequency segments, and the multi-segment EHT-SIG transmission mechanism cannot be supported. In still another aspect, it is assumed that available channels are noncontiguous because a part of 20 MHz channels in an 80 MHz channel in a specific segment are unavailable (for example, occupied or interfered). In a preamble puncture transmission method, if a preamble (and subsequent data) is not transmitted through a part of 20 MHz channels, a physical layer protocol data unit PPDU is still transmitted. This increases channel utilization of a part of channels in an interference case. Therefore, how to support preamble puncture transmission in the multi-segment EHT-SIG transmission mechanism, to improve channel utilization in an interference case also becomes an urgent problem to be resolved.

Embodiments of this application provide a method for indicating a channel in a wireless local area network, to support channel indication in a larger bandwidth of IEEE 802.11be. On one hand, a receiver in data transmission can determine an 80 MHz channel on which the receiver parks, so that the receiver can accurately obtain signaling and data of the receiver through the 80 MHz channel on which the receiver parks, and PPDU transmission shown in FIG. 2 is supported. This improves transmission efficiency, and reduces signaling overheads. On the other hand, according to the solutions in embodiments of this application, a receiver in data transmission may further determine to park on a temporary primary channel in an 80 MHz channel, to support preamble puncture transmission in a data transmission process. In other words, if available channels are noncontiguous because a part of 20 MHz channels in the 80 MHz channel are unavailable (for example, occupied or interfered), two communication parties can still transmit data through another available channel. This improves channel utilization and flexibility.

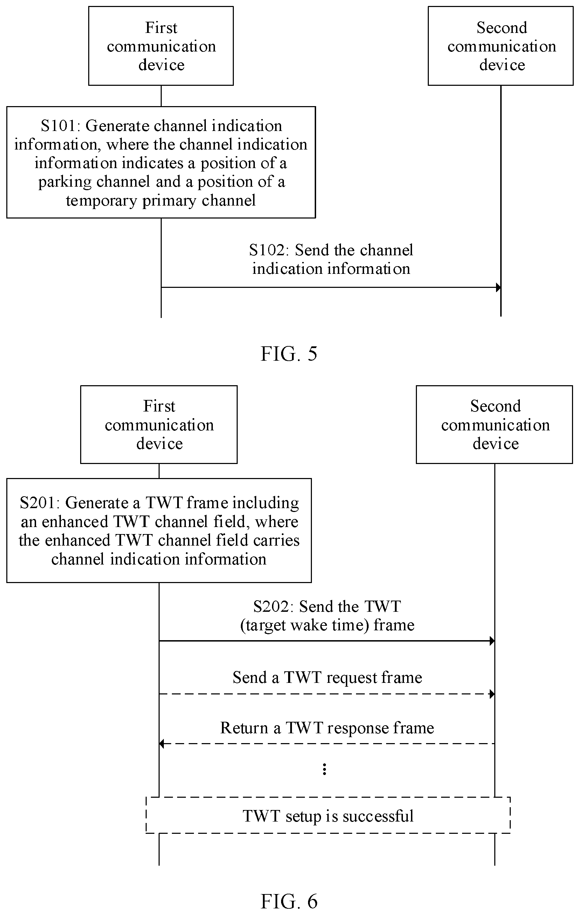

With reference to FIG. 5 to FIG. 26b, the following describes in detail the method for indicating a channel in a wireless local area network provided in embodiments of this application. In embodiments of this application, the method is described by using a first communication device and a second communication device. It may be understood that the first communication device may be an AP or a STA (for example, the AP or the STA shown in FIG. 3), and the second communication device may also be an AP or a STA (for example, the AP or the STA shown in FIG. 3).

### Embodiment 1

FIG. 5 is a first schematic flowchart of a method for indicating a channel in a wireless local area network according to an embodiment of this application. As shown in FIG. 5, the method for indicating a channel in the wireless local area network provided in this embodiment of this application includes but is not limited to the following steps.

S101: A first communication device generates channel indication information, where the channel indication information indicates a location of a parking channel and a location of a temporary primary channel.

Specifically, a bandwidth of the parking channel is 80 MHz, a bandwidthlocation of the temporary primary channel is 20 MHz, and the parking 80 MHz channel includes the 20 MHz temporary primary channel. Therefore, based on the channel indication information, the first communication device may notify a second communication device of an 80 MHz channel to park on, and a temporary primary channel in the 80 MHz parking channel to perform listening. In this way, the second communication device can receive signaling information through the 80 MHz channel on which the second communication device parks. Optionally, the location of the parking channel may be understood as a location in a system bandwidth, and the location of the temporary primary channel may be understood as a location in the system bandwidth. For example, 802.11be may support a maximum of 320 MHz or 240 MHz system bandwidth.

Optionally, the system bandwidth may include a 240 MHz channel or a 320 MHz channel. The 240 MHz channel may include one 160 MHz channel and one 80 MHz channel, or include three 80 MHz channels. The 320 MHz channel may include two 160 MHz channels, include two 80 MHz channels and one 160 MHz channel, include four 80 MHz channels, or include one 240 MHz channel and one 80 MHz channel.

Optionally, the system bandwidth may include one or more frequency segments, and a bandwidth of one frequency segment may be 40 MHz, 80 MHz, or 160 MHz. For ease of description, an example in which the bandwidth of the frequency segment is 80 MHz is used for description in this embodiment of this application. For example, as shown in FIG. 1b, the 320 MHz bandwidth includes four frequency segments.

Therefore, the channel indication information may indicate a location (location) of a parking 80 MHz channel in 320 MHz or 240 MHz supported by 802.11be and a location of a temporary primary 20 MHz channel. In other words, the location of the parking channel may indicate that the parking channel whose bandwidth is 80 MHz is in which frequency segment. The location of the temporary primary channel may indicate that the temporary primary channel whose bandwidth is 20 MHz is which 20 MHz channel in the parking channel whose bandwidth is 80 MHz.

In a possible implementation, the channel indication information may include the location of the temporary primary channel, and the location of the temporary primary channel implicitly indicates the location of the parking 80 MHz channel. For example, the temporary primary channel is the channel 7 shown in FIG. 1b. An 80 MHz channel in which the channel 7 is located, namely, a second 80 MHz channel, is the parking 80 MHz channel.

In another possible implementation, the channel indication information includes not only the location of the parking channel, but also the location of the temporary primary channel. For example, the parking channel is a second 80 MHz channel, and the temporary primary channel is a channel 5 in the second 80 MHz channel.

Optionally, the channel indication information further includes an operating bandwidth indication, indicating a bandwidth of an operating channel. The bandwidth of the operating channel may be 20 MHz, 40 MHz, 80 MHz, 160 MHz, 240 MHz, or 320 MHz. Optionally, the operating channel may be determined based on the location of the parking channel and/or the location of the temporary primary channel, and a size of the operating bandwidth. For example, if the location of the parking channel is third 80 MHz in the system bandwidth, and the bandwidth of the operating bandwidth indication is 160 MHz, the second communication device may determine that an operating channel of the second communication device is a secondary 160 MHz channel, including the third 80 MHz and fourth 80 MHz.

S102: The first communication device sends the channel indication information to the second communication device. Correspondingly, the second communication device receives the channel indication information.

Correspondingly, the second communication device receives the channel indication information, to determine the location of the parking channel and the location of the temporary primary channel. Optionally, the second communication device may further determine the operating channel. In this way, in a subsequent data transmission process, the second communication device may perform listening or packet detection on the temporary primary 20 MHz channel. The second communication device may receive signaling information of the second communication device on the parking 80 MHz channel, to further obtain data information of the second communication device based on the signaling information.

Optionally, the operating bandwidth may be a bandwidth required when the communication device operates or transmits data, the operating channel is a 20 MHz channel through which data may be transmitted. All 20 MHz channels in the operating bandwidth are operating channels. Therefore, the operating bandwidth may indirectly indicate an operating channel. Specifically, all 20 MHz channels in the operating bandwidth are operating channels. It may be understood that, when a preamble puncture technology is supported, a channel for transmitting data in a data transmission process may be a part of 20 MHz channels included in the operating bandwidth.

In some feasible implementations, a communication protocol supported by the first communication device and the second communication device may be IEEE 802.11be (or referred to as Wi-Fi 7, the EHT protocol). The first communication device in this embodiment of this application may be an AP or a STA, and the second communication device may also be an AP or a STA. Specifically, the following describes different cases of the first communication device and the second communication device.

### 1. The first communication device is an AP, and the second communication device is a STA; or the first communication device is a STA, and the second communication device is an AP

If the first communication device is an AP and the second communication device is a STA, in an example 1, the AP may send channel indication information to the STA, to directly indicate one or more of locations of a parking channel and a temporary primary channel of the STA, and an operating bandwidth of the STA. After receiving the channel indication information, the STA may return response information to the AP, where the response information may be used for accepting or rejecting the channel indication of the AP.

In an example 2: The AP may send channel indication information to the STA, to directly indicate one or more of locations of a parking channel and a temporary primary channel of the STA, and an operating bandwidth of the STA. After receiving the channel indication information, the STA may also send acknowledgment information to notify the AP whether the channel indication information is successfully received. If the channel indication information is successfully received, the STA may perform communication by using the information indicated by the AP by default. If the channel indication information fails to be received, the AP determines that the STA fails to receive the channel indication information and cannot perform communication by using the indicated information. Therefore, the STA may not send response information either.

In an example 3, the AP may send channel indication information to the STA, to indicate one or more of locations of a parking channel and a temporary primary channel, and an operating bandwidth that are recommended by the AP. After receiving the channel indication information, the STA may return response information to the AP, where the response information may be used for accepting, rejecting, or modifying one or more of the parking channel, the temporary primary channel, and the operating bandwidth that are recommended by the AP.

If the first communication device is a STA and the second communication device is an AP, in an example 1, the STA may send channel indication information to the AP, to indicate one or more of locations of a parking channel and a temporary primary channel, and an operating bandwidth that are requested by the STA. After receiving the channel indication information, the STA may return response information to the STA, where the response information may be used for accepting, rejecting, or modifying one or more of the parking channel, the temporary primary channel, and the operating bandwidth that are requested by the STA. In an example 2, the STA sends channel indication information, to directly notify the AP of one or more of locations of a parking channel and a temporary primary channel of the STA, an operating bandwidth, and the like of the STA. After receiving the channel indication information, the AP feeds back acknowledgment information.

### 2. Both the first communication device and the second communication device are APs

In a scenario of coordination between APs, a primary AP may directly indicate or recommend, by using channel indication information, one or more of locations of a parking channel and a temporary primary channel of a secondary AP, and an operating bandwidth of the secondary A. The secondary AP may accept, reject, or modify, by using response information, one or more of the parking channel, the temporary primary channel, and the operating bandwidth that are indicated or recommended by the primary AP. Similarly, a secondary AP may alternatively request, from a primary AP by using channel indication information, one or more of locations of a parking channel and a temporary primary channel of the secondary AP, and an operating bandwidth of the secondary AP. The primary AP may accept, reject, or modify, by using response information, one or more of the parking channel, the temporary primary channel, and the operating bandwidth that are requested by the secondary AP.

### 3. Both the first communication device and the second communication device are STAs

In a STA-to-STA scenario, a STA 1 may directly indicate, recommend, or request, by using the channel indication information, one or more of a channel location of a parking channel, a channel location of a temporary primary channel, and an operating bandwidth. A STA 2 may accept, reject, or modify, by using response information, one or more of the parking channel, the temporary primary channel, and the operating bandwidth that are indicated, recommended, or requested by the STA 1.

Certainly, it may be understood that there is another manner in a procedure in which the first communication device exchanges the channel indication information with the second communication device. This is not limited in this application.

In an implementation, the channel indication information is carried in a media access control (media access control, MAC) frame, and the MAC frame is used for exchanging information about the parking channel and the temporary primary channel with one second communication device. In this case, the MAC frame may include a MAC address of the second communication device.

In an implementation, optionally, the channel indication information may further include an identifier of one or more stations, to indicate to park on a station on an indicated parking channel. The identifier may be a MAC address, an association identifier AID, other identifier information, or the like of the station. In an example, multiple pieces of channel indication information may be carried in one MAC frame, so that information about parking channels and temporary primary channels of multiple stations can be indicated through one frame interaction, and transmission efficiency is higher.

Optionally, the channel indication information in this embodiment of this application may be carried in multiple manners. For example, the channel indication information in this embodiment of this application may be carried in any one of the following media access control (media access control, MAC) frames, such as a TWT request frame, a TWT response frame, a TWT setup frame, a frame including an A-control field (A-Control), a multiple user request to send frame, and another newly designed action frame or trigger frame. In the following embodiments, implementations of the channel indication information and a procedure of interaction between communication devices are further described with reference to some or all of the foregoing descriptions.

It may be further understood that the channel indication information provided in this embodiment of this application may indicate one or more of locations of a parking channel and a temporary primary channel in a channel whose bandwidth is greater than 160 MHz, and an operating bandwidth. In addition, the channel indication information may also indicate one or more of locations of a parking channel and a temporary primary channel in a channel whose bandwidth is 160 MHz or less than 160 MHz (for example, 80 MHz or 40 MHz), and an operating bandwidth.

According to the method in this embodiment of this application, a parking channel indication in a larger bandwidth of IEEE 802.11be may be supported. On one hand, according to the method in this embodiment of this application, a receiver in data transmission can determine an 80 MHz channel on which the receiver parks, so that the receiver can accurately obtain signaling of the receiver through the 80 MHz channel on which the receiver parks, and multi-segment EHT-SIG transmission shown in FIG. 2 is supported. This improves transmission efficiency, and reduces signaling overheads. On the other hand, according to the solutions in embodiments of this application, a receiver in data transmission may further determine to park on a temporary primary channel in an 80 MHz channel, to support preamble puncture transmission in a data transmission process. In other words, if available frequency domain resources are noncontiguous because a part of 20 MHz channels in the 80 MHz channel are unavailable (for example, occupied or interfered), two communication parties can still transmit data through another available channel. This improves channel utilization and flexibility.

### Embodiment 2

In this embodiment of this application, an individual TWT (individual TWT) element field carries channel indication information. In addition, a parking channel, a temporary primary channel, or an operating bandwidth is negotiated with a STA through interaction by using one TWT element field, to indicate a parking channel, a temporary primary channel, and/or an operating bandwidth of a single STA in an SST mechanism and/or a multi-segment EHT-SIG transmission mechanism.

In some feasible implementations, an enhanced TWT channel field (enhanced TWT channel) mentioned in this embodiment of this application may alternatively have another name, for example, an enhanced TWT channel indication field, an EHT TWT indication field (or an EHT TWT indication field), or an enhanced SST indicator field (or an enhanced SST indicator field). A name of the enhanced TWT channel field is not specifically limited in this embodiment of this application.

FIG. 6 is a second schematic flowchart of a method for indicating a channel in a wireless local area network according to an embodiment of this application. As shown in FIG. 6, the method for indicating a channel in the wireless local area network in this embodiment of this application includes but is not limited to the following steps.

S201: A first communication device generates a TWT frame including an enhanced TWT channel field, where the enhanced TWT channel field carries channel indication information.

S202: The first communication device sends the TWT frame to the second communication device. Correspondingly, the second communication device receives the TWT frame.

In some feasible implementations, the TWT frame may include a TWT element field, the TWT element field may include an element identifier field, a length field, a control field, and a TWT parameter information field. The TWT parameter information field includes a request type field and an enhanced TWT channel field. The enhanced TWT channel field may indicate one or more of a location of a parking channel, a location of a temporary primary channel, a location of an operating channel, and an operating bandwidth. In an example, the enhanced TWT channel field carries the channel indication information.

Optionally, the TWT frame may be a TWT request frame or a TWT response frame. A type of an element field included in the TWT response frame is the same as a type of an element field included in the TWT request frame. A difference between the TWT request frame and the TWT response frame lies in that the request type (request type) field includes a 1-bit TWT request bit. If the bit is set to 1, it indicates that the TWT element is a TWT request. If the bit is set to 0, it indicates that the TWT element is a TWT response. Correspondingly, a TWT frame carrying the TWT request may be referred to as the TWT request frame, and a TWT frame carrying the TWT response may be referred to as the TWT response frame.

Optionally, if the TWT frame is the TWT request frame, the TWT request frame may be used for requesting to perform communication by using information indicated by an enhanced TWT channel field in the TWT request frame. If the TWT frame is the TWT response frame, the TWT response frame may be used for allowing communication to be performed by using information indicated by an enhanced TWT channel field in the TWT response frame.

In some feasible implementations, the control field in the TWT frame may include a large bandwidth indication field. The large bandwidth indication field may indicate whether the TWT parameter information field in the TWT frame includes the enhanced TWT channel field. The large bandwidth indication field may be represented by using a reserved bit (reserved) in the control field. For example, the large bandwidth indication field is a 1-bit reserved bit in the control field. For example, when a value of the large bandwidth indication field is 1, it indicates that the TWT parameter information field in the TWT frame includes the enhanced TWT channel field. When the value of the large bandwidth indication field is 0, it indicates that the TWT parameter information field in the TWT frame does not include the enhanced TWT channel field, or it may indicate that the TWT parameter information field in the TWT frame includes a TWT channel field in IEEE 802.11ax. It may be understood that the TWT channel field in IEEE 802.11ax indicates the operating channel. Generally, the value of 0 of the large bandwidth indication field may indicate that a frame structure of the TWT element field in IEEE 802.11ax remains unchanged, and the value of 1 may indicate that the TWT parameter information field changes. Specifically, when the large bandwidth indication field is 1, the TWT parameter information field (TWT parameter information) is generally consistent with an individual TWT parameter set field (individual TWT parameter set field) in IEEE 802.11ax. A difference lies in that an original TWT channel field (TWT channel) in IEEE 802.11ax changes to an enhanced TWT channel field (enhanced TWT channel).

Optionally, in this embodiment of this application, a reserved bit may be reused as a large bandwidth indication field to distinguish between different versions (IEEE 802.11ax and IEEE 802.11be herein). In addition, the different versions may alternatively be distinguished based on a standard type supported by a transmit end and a receive end. For example, if both the transmit end and the receive end support the IEEE 802.11be standard, the TWT channel field represents a meaning of the solutions in this application. Otherwise, the TWT channel field represents a meaning of IEEE 802.11ax.

The large bandwidth indication field may be referred to as a ">160 MHz indication field (>160 MHz indication)", or may be referred to as an add TWT channel present field. A specific name of the large bandwidth indication field is not limited in this embodiment of this application.

The following describes a specific implementation of the enhanced TWT channel field.

In a first feasible implementation, the enhanced TWT channel field may include a parking channel location field and a temporary primary channel location field. The parking channel location field may indicate a location (channel location) of an 80 MHz channel requested or allowed by the first communication device for parking (park), in other words, indicate a location of an 80 MHz parking channel requested or allowed by the first communication device for parking. The temporary primary channel location field may indicate a location of a temporary primary channel (or a temporary primary 20 MHz channel) requested or allowed by the first communication device for parking (park) in the 80 MHz channel, in other words, indicate a location of a 20 MHz channel on which the first communication device needs to park in the 80 MHz parking channel. It may be understood that, in this embodiment of this application, one or more STAs have one temporary primary channel on one 80 MHz channel.

Optionally, the parking channel location field may be referred to as an 80 MHz location field (80 MHz location), and the temporary primary channel location field may be referred to as a temporary primary 20 MHz location field (temporary P20 location). Specific names of the parking channel location field and the temporary primary channel location field are not limited in this embodiment of this application.

Optionally, a length of the enhanced TWT channel field may be 1 byte, namely, 8 bits (bit). A length of the parking channel location field may be 2 bits, a length of the temporary primary channel location field may be 2 bits, and remaining 4 bits are reserved bits. A length (namely, a number of bits) of the parking channel location field and a length (namely, a number of bits) of the temporary primary channel location field are merely examples for description. It may be understood that lengths of the parking channel location field and the temporary primary channel location field may both be 3 bits, and remaining 2 bits are reserved bits. Alternatively, lengths of the parking channel location field and the temporary primary channel location field are both 4 bits, and there is no reserved bit. Alternatively, a length of the parking channel location field is 2 bits, a length of the temporary primary channel location field is 3 bits, remaining 3 bits are reserved bits, and the like. The lengths (namely, a number of bits) of the parking channel location field and the temporary primary channel location field are not specifically limited in this embodiment of this application.

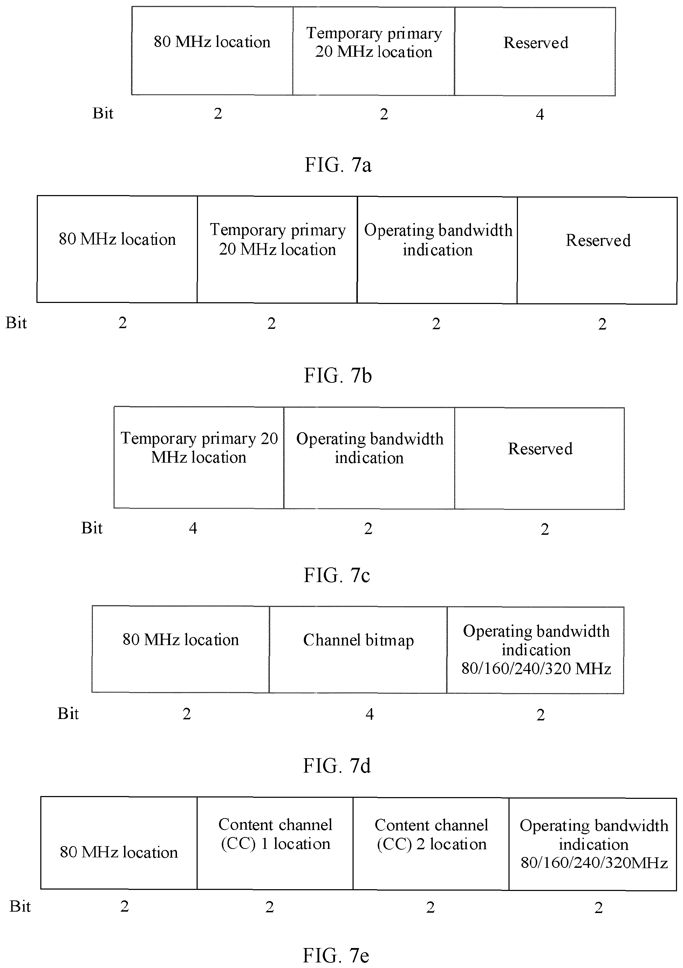

FIG. 7a is a first schematic diagram of the enhanced TWT channel field according to an embodiment of this application. As shown in FIG. 7a, the enhanced TWT channel field includes a 2-bit 80 MHz location field, a 2-bit temporary primary 20 MHz location field, and 4-bit reserved bits. In this embodiment of this application, in the enhanced TWT channel field, the location of the parking channel and the location of the temporary primary channel can be indicated by using only 4 bits, and more information can be indicated by using a minimum number of bits.

For meanings of values of the 80 MHz location field, refer to the following table 1. For meanings of values of the temporary primary 20 MHz location field, refer to the following table 2. It may be understood that the table 1 and the table 2 are merely examples for description. A correspondence order between the values and the meanings of the 80 MHz location field and a correspondence order between the values and the meanings of the temporary primary 20 MHz location field are not limited in this embodiment of this application. It may be further understood that, in the meanings of the values of the 80 MHz location field in the table 1, 80 MHz with a highest frequency may alternatively be used as first 80 MHz, and each 80 MHz with a decreasing frequency is successively used as second 80 MHz, third 80 MHz, and the rest can be deduced by analogy. In another correspondence, in the table 1, first 80 MHz may be a primary 80 MHz channel, second 80 MHz may be a secondary 80 MHz channel, and third 80 MHz and fourth 80 MHz are respectively a higher-frequency 80 MHz channel and a lower-frequency 80 MHz channel in the secondary 160 MHz channel. Similarly, in an example, in the meanings of the values of the temporary primary 20 MHz location field in the table 2, 20 MHz with a highest frequency may be used as first 20 MHz, and each 20 MHz with a decreasing frequency is successively used as second 20 MHz, third 20 MHz, and the rest can be deduced by analogy. This is not limited in this embodiment of this application.

**Table 1: Description of meanings of values of an 80 MHz location field**

| Value | Meaning (80 MHz with a lowest frequency in all bandwidths is used as first 80 MHz, and each 80 MHz with an increasing frequency is successively used as second 80 MHz, third 80 MHz, and the rest can be deduced by analogy.) |
|---|---|
| 0 | First 80 MHz |
| 1 | Second 80 MHz |
| 2 | Third 80 MHz |
| 3 | Fourth 80 MHz |

**Table 2: Description 1 of meanings of values of a temporary primary 20 MHz location field**

| Value | Meaning (20 MHz with a lowest frequency in all 80 MHz is used as first 20 MHz, and each 20 MHz with an increasing frequency is successively used as second 20 MHz, third 20 MHz, and the rest can be deduced by analogy.) |
|---|---|
| 0 | First 20 MHz of 80 MHz indicated by a "80 MHz location field" |
| 1 | Second 20 MHz of the 80 MHz indicated by the "80 MHz location field" |
| 2 | Third 20 MHz of the 80 MHz indicated by the "80 MHz location field" |
| 3 | Fourth 20 MHz of the 80 MHz indicated by the "80 MHz location field" |

Optionally, the temporary primary channel location field may be represented by using a 4-bit bitmap, where 1 bit corresponds to one 20 MHz channel. Specifically, if a bit in the 4-bit bitmap of the temporary primary channel location field is set to 1, it indicates that a 20 MHz channel corresponding to the bit that is set to 1 is the temporary primary channel. For example, the value (binary) of the temporary primary channel location field is 1000, indicating first 20 MHz of 80 MHz indicated by a first location field. The value (binary) of the temporary primary channel location field is 0100, indicating second 20 MHz of the 80 MHz indicated by the first location field. The value (binary) of the temporary primary channel location field is 0010, indicating third 20 MHz of the 80 MHz indicated by the first location field. The value (binary) of the temporary primary channel location field is 0001, indicating the fourth 20 MHz of the 80 MHz indicated by the first location field. It may be understood that the correspondence order between the values and the meanings of the temporary primary channel location field is not limited in this embodiment of this application. In this embodiment of this application, the 4-bit bitmap indicates the location of the temporary primary channel. When parsing the temporary primary channel location field, the receive end may not need to perform conversion between binary and decimal. This reduces parsing complexity of the receive end.

Optionally, the enhanced TWT channel field may further include an operating bandwidth indication field (operating bandwidth indication). The operating bandwidth indication field may indicate an operating bandwidth (operating bandwidth) requested or allowed by the first communication device. The operating bandwidth in this embodiment of this application may be an equivalent bandwidth.

An operating bandwidth in IEEE 802.11ax is reflected by using an operating channel, to be specific, a sum of bandwidths of operating channels indicated by an 8-bit TWT channel field in IEEE 802.11ax is the operating bandwidth. Therefore, the 8-bit TWT channel field in IEEE 802.11ax cannot indicate an operating bandwidth of a communication device whose bandwidth is greater than 160 MHz. In this embodiment of this application, an operating bandwidth of the communication device whose bandwidth is greater than 160 MHz is directly indicated in the enhanced TWT channel field, to indicate operating bandwidth in a larger bandwidth (for example, 240 MHz or 320 MHz). It may be understood that an operating bandwidth less than 160 MHz (for example, 80 MHz) and/or an operating bandwidth of 160 MHz can also be indicated in this embodiment of this application.

Optionally, the length of the enhanced TWT channel field may be 1 byte, namely, 8 bits. The length of the parking channel location field may be 2 bits, the length of the temporary primary channel location field may be 2 bits, a length of the operating bandwidth indication field may be 2 bits, and remaining 2 bits may be reserved bits. The lengths (namely, a number of bits) of the parking channel location field, the temporary primary channel location field, and the operating bandwidth indication field are merely examples for description. It may be understood that the lengths of the parking channel location field and the temporary primary channel location field may both be 3 bits, a length of the operating bandwidth indication field is 2 bits, and there is no reserved bit. Alternatively, the length of the parking channel location field is 2 bits, and lengths of the temporary primary channel location field and the operating bandwidth indication field are both 3 bits, and there is no reserved bit. Alternatively, the parking channel location field is 3 bits, lengths of the temporary primary channel location field and the operating bandwidth indication field are both 2 bits, and a remaining 1 bit is a reserved bit. The lengths (namely, a number of bits) of the parking channel location field, the temporary primary channel location field, and the operating bandwidth indication field are not specifically limited in this embodiment of this application.

FIG. 7b is a second schematic diagram of the enhanced TWT channel field according to an embodiment of this application. As shown in FIG. 7b, the enhanced TWT channel field includes a 2-bit 80 MHz location field, a 2-bit temporary primary 20 MHz location field, a 2-bit operating bandwidth indication field, and 2-bit reserved bits. In this embodiment of this application, 2 bits in the enhanced TWT channel field indicate an operating bandwidth, and there is no need to separately indicate the operating bandwidth by using another field. Signaling overheads may be reduced by increasing an amount of information in the enhanced TWT channel field.

For meanings of values of the 80 MHz location field, refer to the foregoing table 1. For meanings of values of the temporary primary 20 MHz location field, refer to the foregoing table 2. For meanings of values of the operating bandwidth indication field, refer to the following table 3. It may be understood that the table 3 is merely an example for description, and a correspondence order between the values and the meanings of the operating bandwidth indication field is not limited in this embodiment of this application.

**Table 3: Description of meanings of values of an operating bandwidth indication field**

| Value | Meaning |
|---|---|
| 0 | An operating bandwidth is 80 MHz. |
| 1 | The operating bandwidth is 160 MHz. |
| 2 | The operating bandwidth is 240 MHz. |
| 3 | The operating bandwidth is 320 MHz. |

In a second feasible implementation, the enhanced TWT channel field may include a temporary primary channel location field. The temporary primary channel location field may indicate a location of a temporary primary channel (or a temporary primary 20 MHz channel) requested or allowed by the first communication device for parking. An 80 MHz channel on which the temporary primary channel is located may be a parking channel of the first communication device. The temporary primary channel location field may be referred to as a temporary primary 20 MHz location field. It may be understood that, in this embodiment of this application, one or more STAs have one temporary primary channel in one 80 MHz. In this embodiment of this application, the temporary primary channel location field in the enhanced TWT channel field indicates the location of the temporary primary channel, and then a location of the parking channel is indirectly indicated by the location of the temporary primary channel. The locations of the temporary primary channel and the parking channel can be obtained by indicating only one piece of information in the enhanced TWT channel field. This reduces signaling complexity.

Optionally, the enhanced TWT channel field may further include an operating bandwidth indication field. The operating bandwidth indication field may indicate an operating bandwidth requested or allowed by the first communication device.

Optionally, a length of the enhanced TWT channel field may be 1 byte, namely, 8 bits (bit). The length of the temporary primary channel location field may be 4 bits, a length of the operating bandwidth indication field may be 2 bits, and remaining 2 bits may be reserved bits. The lengths (namely, a number of bits) of the temporary primary channel location field and the operating bandwidth indication field are not specifically limited in this embodiment of this application.

FIG. 7c is a third schematic diagram of the enhanced TWT channel field according to an embodiment of this application. As shown in FIG. 7c, the enhanced TWT channel field includes a 4-bit temporary primary 20 MHz location field, a 2-bit operating bandwidth indication field, and 2-bit reserved bits. It may be understood that in FIG. 7c, the first two fields (namely, the 80 MHz location field and the temporary primary 20 MHz location field) in FIG. 7b or FIG. 7a are combined into one field, to directly indicate which one of sixteen 20 MHz channels is the temporary primary 20 MHz location.

In this embodiment of this application, the location of the temporary primary channel is further indicated, to notify a receive end for subsequent data transmission to perform channel listening or data packet detection on the temporary primary channel, and read a U-SIG on the temporary primary channel to obtain bandwidth information and puncture-related information, to read an EHT-SIG to obtain resource indication information. This supports a preamble puncture transmission technology and improving channel utilization.

For meanings of values of the temporary primary 20 MHz location field, refer to the following table 4. For meanings of values of the operating bandwidth indication field, refer to the foregoing table 3. It may be understood that the table 4 is merely an example for description, and a correspondence order between the values and the meanings of the temporary primary 20 MHz location field is not limited in this embodiment of this application.

**Table 4: Description 2 of meanings of values of a temporary primary 20 MHz location field**

| Value | Meaning (20 MHz with a lowest frequency in all bandwidths is used as first 20 MHz, and each 20 MHz with an increasing frequency is successively used as second 20 MHz, third 20 MHz, and the rest can be deduced by analogy.) |
|---|---|
| 0 (or 0000) | First 20 MHz (or channel 1) |
| 1 (or 0001) | Second 20 MHz (or channel 2) |
| 2 (or 0010) | Third 20 MHz (or channel 3) |
| 3 (or 0011) | Fourth 20 MHz (or channel 4) |
| 4 (or 0100) | Fifth 20 MHz (or channel 5) |
| 5 (or 0101) | Sixth 20 MHz (or channel 6) |
| 6 (or 0110) | Seventh 20 MHz (or channel 7) |
| 7 (or 0111) | Eighth 20 MHz (or channel 8) |
| 8 (or 1000) | Ninth 20 MHz (or channel 9) |
| 9 (or 1001) | Tenth 20 MHz (or channel 10) |
| 10 (or 1010) | Eleventh 20 MHz (or channel 11) |
| 11 (or 1011) | Twelfth 20 MHz (or channel 12) |
| 12 (or 1100) | Thirteenth 20 MHz (or channel 13) |
| 13 (or 1101) | Fourteenth 20 MHz (or channel 14) |
| 14 (or 1110) | Fifteenth 20 MHz (or channel 15) |
| 15 (or 1111) | Sixteenth 20 MHz (or channel 16) |

Optionally, an 80 MHz channel on which the temporary primary channel is located may be a parking channel of the first communication device. In an example, 80 MHz with a lowest frequency in all bandwidths is used as first 80 MHz, and each 80 MHz with an increasing frequency is successively used as second 80 MHz, third 80 MHz, and the rest can be deduced by analogy. If the temporary primary channel is any one of the first 20 MHz to the fourth 20 MHz (or the channel 1 to the channel 4), an 80 MHz channel on which the temporary primary channel is located is the first 80 MHz. If the temporary primary channel is any one of the fifth 20 MHz to the eighth 20 MHz (or the channel 5 to the channel 8), an 80 MHz channel on which the temporary primary channel is located is the second 80 MHz channel. If the temporary primary channel is any one of the ninth 20 MHz to the twelfth 20 MHz (or the channel 9 to the channel 12), an 80 MHz channel on which the temporary primary channel is located is the third 80 MHz channel. If the temporary primary channel is any one of the thirteenth 20 MHz to the sixteenth 20 MHz (or the channel 13 to the channel 16), an 80 MHz channel on which the temporary primary channel is located is the fourth 80 MHz channel. In another example, based on a preset channel division manner, the location of the temporary primary channel may implicitly indicate the location of the parking channel. For example, in channel distribution in the 320 MHz bandwidth shown in FIG. 1b, if the enhanced TWT channel field indicates that the temporary primary channel is the channel 5, a secondary 80 MHz channel on which the temporary primary channel is located is the parking channel.

In a third feasible implementation, the enhanced TWT channel field may include a parking channel location field and a channel bitmap field (channel bitmap). The parking channel location field may indicate a location of an 80 MHz channel requested or allowed by the first communication device for parking (park), in other words, indicate a location of an 80 MHz parking channel requested or allowed by the first communication device for parking. The channel bitmap field may indicate a location of an operating channel in an 80 MHz channel requested or allowed by the first communication device for parking (park). To be specific, the first communication device operates or transmits data on one or more 20 MHz channels corresponding to one or more bits that are set to 1 in the channel bitmap field. One bit in the channel bitmap field corresponds to one 20 MHz channel.

In this embodiment of this application, the enhanced TWT channel field is used for enabling different STAs to park on different frequency segments, to support the foregoing multi-segment signaling transmission manners of the U-SIG and the EHT-SIG shown in FIG. 2.

Optionally, if only 1 bit in the channel bitmap field is set to 1, it may indicate that an operating bandwidth requested or allowed by the first communication device is 20 MHz. If more than one bit in the channel bitmap field is set to 1, it may indicate that an operating bandwidth requested or allowed by the first communication device is greater than 20 MHz. If more than one bit in the channel bitmap field is set to 1, an operating bandwidth indication further needs to indicate a size of the operating bandwidth, to be specific, indicate that the size of the operating bandwidth is any one of 80 MHz, 160 MHz, 240 MHz, and 320 MHz.

The parking channel location field may be an 80 MHz location field (80 MHz location), and the channel bitmap field may also be referred to as a bitmap field. Specific names of the parking channel location field and the channel bitmap field are not limited in this embodiment of this application.

Optionally, the enhanced TWT channel field may further include an operating bandwidth indication field. The operating bandwidth indication field may indicate an operating bandwidth requested or allowed by the first communication device. The operating bandwidth requested or allowed by the first communication device may be greater than or equal to a bandwidth of a parking channel requested or allowed by the first communication device.

Optionally, a length of the enhanced TWT channel field may be 1 byte, namely, 8 bits. A length of the parking channel location field may be 2 bits, a length of the channel bitmap field may be 4 bits, and a length of the operating bandwidth indication field may be 2 bits. The channel bitmap field in this embodiment of this application reuses a bitmap form of the TWT channel field in IEEE 802.11ax, to indicate an operating channel on an 80 MHz parking channel in a channel whose bandwidth is greater than 160 MHz. An 8-bit resource of the enhanced TWT channel field can be fully used, to simultaneously indicate the parking channel, the operating channel on the parking channel, and operating bandwidth information.

FIG. 7d is a fourth schematic diagram of the enhanced TWT channel field according to an embodiment of this application. As shown in FIG. 7d, the enhanced TWT channel field includes a 2-bit 80 MHz location field, a 4-bit channel bitmap field, and a 2-bit operating bandwidth indication field. For meanings of values of the 80 MHz location field, refer to the table 1. For meanings of values of the operating bandwidth indication field, refer to the table 3. For meanings of values of the channel bitmap field, refer to the following table 5. It may be understood that the table 5 is merely an example for description, and a correspondence order between values and meanings of channel bitmap field is not limited in this embodiment of this application.

**Table 5: Description of meanings of values of a channel bitmap field**

| Value | Meaning (20 MHz with a lowest frequency in all 80 MHz is used as first 20 MHz, and each 20 MHz with an increasing frequency is successively used as second 20 MHz, third 20 MHz, and the rest can be deduced by analogy.) |
|---|---|
| 0001 | First 20 MHz of 80 MHz indicated by a "80 MHz location field" |
| 0010 | Second 20 MHz of the 80 MHz indicated by the "80 MHz location field" |
| 0100 | Third 20 MHz of the 80 MHz indicated by the "80 MHz location field" |
| 1000 | Fourth 20 MHz of the 80 MHz indicated by the "80 MHz location field" |

In a fourth feasible implementation, the enhanced TWT channel field may include a parking channel location field, a content channel 1 (content channel 1, CC 1) location field (CC 1 location), and a content channel 2 location field (CC 2 location). The parking channel location field may indicate a location of an 80 MHz channel requested or allowed by the first communication device for parking (park), in other words, indicate a location of an 80 MHz parking channel requested or allowed by the first communication device for parking. The content channel 1 location field and the content channel 2 location field may respectively indicate a channel location of the content channel 1 and a channel location of the content channel 2 in the 80 MHz channel requested or allowed by the first communication device for parking.

The location of the content channel herein may be a location of a 20 MHz channel on which the first communication device carries a part of resource scheduling information during data transmission.

Optionally, the enhanced TWT channel field may further include an operating bandwidth indication field. The operating bandwidth indication field may indicate an operating bandwidth requested or allowed by the first communication device.

Optionally, a length of the enhanced TWT channel field may be 1 byte, namely, 8 bits. Lengths of the parking channel location field, the content channel 1 location field, the content channel 2 location field, and the operating bandwidth indication field may all be 2 bits.

FIG. 7e is a fifth schematic diagram of the enhanced TWT channel field according to an embodiment of this application. As shown in FIG. 7e, the enhanced TWT channel field includes a 2-bit 80 MHz location field, a 2-bit content channel 1 location field, a 2-bit content channel 2 location field, and a 2-bit operating bandwidth indication field. In this embodiment of this application, a content channel location field indicates that data is transmitted in which 20 MHz channels in the 80 MHz parking channel in a subsequent data transmission process, to notify the receive end for data transmission to listen to a signal on which 20 MHz channels. This ensures normal data communication.

For meanings of values of the 80 MHz location field, refer to the foregoing table 1. For meanings of values of the operating bandwidth indication field, refer to the foregoing table 3. Resource indication information of the first communication device may be stored on a CC 1 and a CC 2, and in a range of an 80 MHz channel, four 20 MHz carry the CC 1, the CC 2, the CC 1, and the CC 2 in ascending order of absolute frequencies. Therefore, the CC 1 is carried on a first 20 MHz channel and a third 20 MHz channel in one 80 MHz channel, and the CC 2 is carried on a second 20 MHz channel and a fourth 20 MHz channel in the 80 MHz channel. Therefore, for meanings of values of the content channel 1 location field, refer to the following table 6. For meanings of values of the content channel 2 location field, refer to the following table 7. It may be understood that the table 6 and the table 7 are merely examples for description. A correspondence order between the values and the meanings of the content channel 1 location field and a correspondence order between the values and the meanings of the content channel 2 location field are not limited in this embodiment of this application.

**Table 6: Description of meanings of values of a CC 1 location field**

| Value (Binary) | Meaning (20 MHz with a lowest frequency in all 80 MHz is used as first 20 MHz, and each 20 MHz with an increasing frequency is successively used as second 20 MHz, third 20 MHz, and the rest can be deduced by analogy.) |
|---|---|
| 00 | CC 1 does not exist. |
| 01 | Third 20 MHz of 80 MHz indicated by a "80 MHz location field" |
| 10 | First 20 MHz of the 80 MHz indicated by the "80 MHz location field" |
| 11 | First and third 20 MHz of the 80 MHz indicated by the "80 MHz location field |

**Table 7: Description of meanings of values of a CC 2 location field**

| Value (Binary) | Meaning (20 MHz with a lowest frequency in all 80 MHz is used as first 20 MHz, and each 20 MHz with an increasing frequency is successively used as second 20 MHz, third 20 MHz, and the rest can be deduced by analogy.) |
|---|---|
| 00 | CC 2 does not exist. |
| 01 | Fourth 20 MHz of 80 MHz indicated by a "80 MHz location field" |
| 10 | Second 20 MHz of the 80 MHz indicated by the "80 MHz location field" |
| 11 | Second and fourth 20 MHz of the 80 MHz indicated by the "80 MHz location field |

It may be understood that, generally, when an AP sends data, it needs to be ensured that at least one CC 1 and one CC 2 exist, so that a STA obtains all resource allocation information. However, for the STA in a 20 MHz operating mode, when the AP sends data, the AP only needs to ensure that there is one CC 1 or one CC 2. Therefore, in this embodiment of this application, there is at least one CC 1 or at least one CC 2 in the 80 MHz indicated by the "80 MHz location field". In other words, at least one 20 MHz channel in the 80 MHz indicated by the "80 MHz location field" transmits data in a subsequent data transmission process. In other words, as shown in the table 6 and the table 7, values of the CC 1 location field and the CC 2 location field in this embodiment of this application cannot be both 00.

Optionally, the content channel 1 location field and the content channel 2 location field each may be indicated by using 1 bit. The parking channel location field and the operating bandwidth indication field may be indicated by using 2 bits. The remaining 2 bits may be reserved bits. If the content channel 1 location field is set to 1, the first 20 MHz of the 80 MHz indicated by the parking channel location field is indicated. If the content channel 1 location field is set to 0, the third 20 MHz of the 80 MHz indicated by the parking channel location field is indicated. Similarly, if the content channel 2 location field is set to 1, the second 20 MHz of the 80 MHz indicated by the parking channel location field is indicated. If the content channel 2 location field is set to 0, the fourth 20 MHz of the 80 MHz indicated by the parking channel location field is indicated. It may be understood that the correspondence order between the values and the meanings of the content channel 1 location field is not limited in this embodiment of this application. For example, if the content channel 1 location field is set to 0, the third 20 MHz of 80 MHz indicated by the parking channel location field is indicated. If the content channel 1 location field is set to 1, the first 20 MHz of 80 MHz indicated by the parking channel location field is indicated. Similarly, the correspondence order between the values and the meanings of the content channel 2 location field is not limited in this embodiment of this application. It may be further understood that, if the content channel 1 location field is null, it may indicate that the CC 1 does not exist. If the content channel 2 location field is null, it may indicate that the CC 2 does not exist.

In a fifth feasible implementation, the enhanced TWT channel field may indicate locations of all 20 MHz operating channels requested or allowed by the first communication device. The enhanced TWT channel field may be represented by using a 2-byte (namely, 16 bits) bitmap (bitmap). Specifically, if a bit in the enhanced TWT channel field is set to 1, it indicates that a 20 MHz channel corresponding to the bit that is set to 1 is an operating channel requested or allowed by the first communication device. In this embodiment of this application, a 2-byte (namely, 16 bits) bitmap indicates an operating channel in a channel whose bandwidth is greater than 160 MHz. This resolves a problem that a TWT channel field in IEEE 802.11ax cannot indicate an operating channel whose bandwidth is greater than 160 MHz.

For example, 20 MHz with a lowest frequency in all bandwidths (320 MHz herein) is used as a first 20 MHz channel, and subsequent 20 MHz channels with gradually increasing frequencies are sequentially a second 20 MHz channel, a third 20 MHz channel, and the rest can be deduced by analogy. If a value of the enhanced TWT channel field is 0010 1101 0101 1001, it indicates that operating channels requested or allowed by the first communication device are the first, the fourth, the seventh, the fifth, the ninth, the eleventh, the twelfth, and the fourteenth 20 MHz channels. For another example, if a value of the enhanced TWT channel field is 0010 0000 0100 1001, it indicates that operating channels requested or allowed by the first communication device are the first, the fourth, the seventh, and the fourteenth 20 MHz channels.

In a sixth feasible implementation, the enhanced TWT channel field may indicate a location of a temporary primary channel (or a temporary primary 20 MHz channel) requested or allowed by the first communication device for parking. The enhanced TWT channel field may be represented by using a 2-byte (namely, 16 bits) bitmap. Only 1 bit in the enhanced TWT channel field is set to 1, and a 20 MHz channel corresponding to the bit that is set to 1 is a temporary primary channel requested or allowed by the first communication device for parking. An 80 MHz channel on which the temporary primary channel is located may be an 80 MHz parking channel requested or allowed by the first communication device for parking. It may be understood that, in this embodiment of this application, one or more STAs have one temporary primary channel in one 80 MHz.

For example, 20 MHz with a lowest frequency in all bandwidths (320 MHz herein) is used as a first 20 MHz channel, and subsequent 20 MHz channels with gradually increasing frequencies are sequentially a second 20 MHz channel, a third 20 MHz channel, and the rest can be deduced by analogy. Similarly, 80 MHz with a lowest frequency in all bandwidths (320 MHz herein) is used as a first 80 MHz channel, and subsequent 80 MHz channels with gradually increasing frequencies are sequentially a second 80 MHz channel, a third 80 MHz channel, and the rest can be deduced by analogy. If a value of the enhanced TWT channel field is 0000 0000 0100 0000, it indicates that the temporary primary channel is the seventh 20 MHz channel, and the parking channel is the second 80 MHz channel. For another example, if a value of the enhanced TWT channel field is 0001 0000 0000 0000, it indicates that the temporary primary channel is the thirteenth 20 MHz channel, and the parking channel is the fourth 80 MHz channel.

Optionally, the enhanced TWT channel field may indicate a location of a parking channel requested or allowed by the first communication device for parking. The enhanced TWT channel field may be represented by using a 2-byte (namely, 16 bits) bitmap. In addition, in the enhanced TWT channel field, only 4 bits corresponding to an 80 MHz channel are set to 1, and the 80 MHz channel is the parking channel.

For example, 80 MHz with a lowest frequency in all bandwidths (320 MHz herein) is used as a first 80 MHz channel, and subsequent 80 MHz channels with gradually increasing frequencies are sequentially a second 80 MHz channel, a third 80 MHz channel, and the rest can be deduced by analogy. If the value of the enhanced TWT channel field is 0000 1111 0000 0000, it indicates that the parking channel is the third 80 MHz channel. If the value of the enhanced TWT channel field is 0000 0000 1111 0000, it indicates that the parking channel is the second 80 MHz channel. If the value of the enhanced TWT channel field is 1111 0000 0000 0000, it indicates that the parking channel is the fourth 80 MHz channel. If the value of the enhanced TWT channel field is 0000 0000 0000 1111, it indicates that the parking channel is the first 80 MHz channel.

In conclusion, in the foregoing six feasible implementations, if the enhanced TWT channel field does not indicate the operating bandwidth requested or allowed by the first communication device, the operating bandwidth (operating bandwidth) information may be indicated by other indication information, for example, an operation mode indication (operation mode indication, OMI) control field or an operation element (Operation Element) field. Certainly, in the foregoing six optional implementations, if the enhanced TWT channel field has indicated the operating bandwidth requested or allowed by the first communication device, the operating bandwidth (operating bandwidth) information does not need to be indicated by other indication information.

It may be understood that the foregoing six feasible implementations are not only applicable to indication of a channel whose bandwidth is greater than 160 MHz, but also applicable to indication of a channel whose bandwidth is less than 160 MHz or equal to 160 MHz.

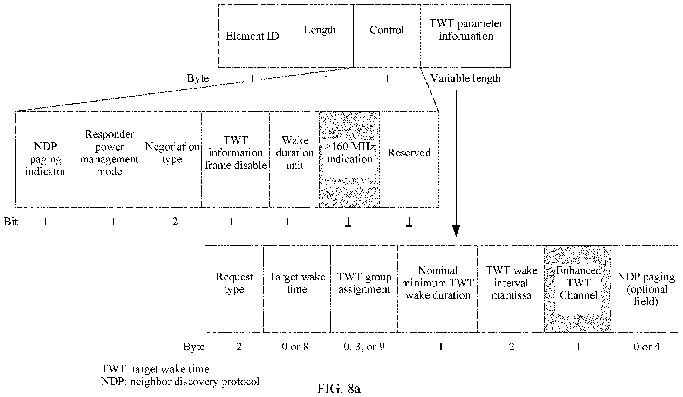

In some feasible implementations, if the enhanced TWT channel field is represented by using 1 byte, namely, 8 bits, for a structure and a meaning of the enhanced TWT channel field, refer to any description of the first feasible implementation to the fourth feasible implementation. Details are not described herein again. FIG. 8a is a first schematic diagram of the TWT element field in the TWT frame according to an embodiment of this application. As shown in FIG. 8a, the TWT element field includes an element identifier field (element ID), a length field (length), a control field (control), and a TWT parameter information field. The control field includes a 1-bit ">160 MHz indication field", another field, and a reserved bit (for details, refer to FIG. 8a). The TWT parameter information field includes a 1-byte (namely, 8 bits) enhanced TWT channel field and another field (for details, refer to FIG. 8a). In this embodiment of this application, the TWT frame in the IEEE 802.11ax is reused as much as possible, a frame structure of the TWT frame (herein referred to as a TWT request frame and/or a TWT response frame) in the IEEE 802.11ax is not changed, and a length of the TWT frame is not increased. A meaning of the TWT channel field in the IEEE 802.11ax is changed, to indicate a channel in a larger bandwidth (for example, 240 MHz and 320 MHz). This reduces signaling overheads and improves compatibility.

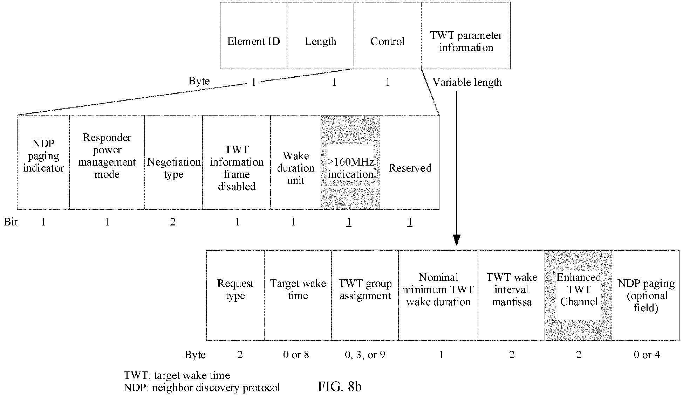

Optionally, if the enhanced TWT channel field is represented by using 2 bytes, namely, 16 bits, for a structure and a meaning of the enhanced TWT channel field, refer to any one of the foregoing fifth feasible implementation to the foregoing sixth feasible implementation. Details are not described herein again. FIG. 8b is a second schematic diagram of the TWT element field in the TWT frame according to an embodiment of this application. As shown in FIG. 8b, the TWT element field includes an element identifier field (element ID), a length field (length), a control field (control), and a TWT parameter information field. The control field includes a 1-bit ">160 MHz indication field", another indication field, and a reserved bit (for details, refer to FIG. 8b). The TWT parameter information field includes a 2-byte (namely, 16 bits) enhanced TWT channel field and another indication field (for details, refer to FIG. 8b). In this embodiment of this application, a frame structure of the TWT frame (which herein refers to a TWT request frame and/or a TWT response frame) in IEEE 802.11ax is not changed. A length of the TWT channel field in the IEEE 802.11ax is increased, and a meaning of the TWT channel field in IEEE 802.11ax is reused, to indicate an operating channel in a larger bandwidth (for example, 160 MHz, 240 MHz, and 320 MHz).

Optionally, if the TWT parameter information field further includes a temporary primary channel location field, for the structure and the meaning of the enhanced TWT channel field, refer to corresponding descriptions in the foregoing fifth feasible implementation. Details are not described herein again. The temporary primary channel location field may indicate a location of the temporary primary channel. An 80 MHz channel on which the temporary primary channel is located may be an 80 MHz parking channel requested or allowed by the first communication device for parking. The temporary primary channel location field may be before or after the enhanced TWT channel field. This is not limited in this embodiment of this application. The temporary primary channel location field may be referred to as a temporary primary 20 MHz location field (temporary P20 location).

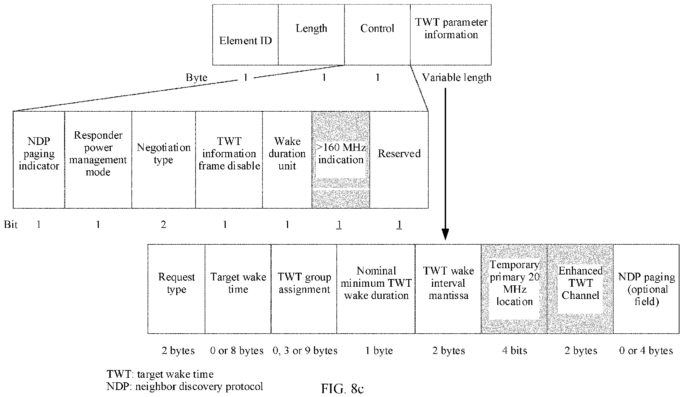

Specifically, a length of the temporary primary 20 MHz location field may be 4 bits, and a length of the enhanced TWT channel field may be 2 bytes, namely, 16 bits. If the TWT parameter information field includes both the 4-bit temporary primary channel location field and the 2-byte enhanced TWT channel field, the TWT frame may indicate both a temporary primary channel and an operating channel whose bandwidths are greater than 160 MHz. FIG. 8c is a third schematic diagram of the TWT element field in the TWT frame according to an embodiment of this application. As shown in FIG. 8c, the TWT element field includes an element identifier field (element ID), a length field (length), a control field (control), and a TWT parameter information field. The control field includes a 1-bit ">160 MHz indication field", another indication field, and a reserved bit (for details, refer to FIG. 8c). The TWT parameter information field includes a 2-byte (namely, 16 bits) enhanced TWT channel field, a 4-bit temporary primary 20 MHz location field, and another indication field (for details, refer to FIG. 8c). In this embodiment of this application, a frame structure of the TWT frame (which herein refers to a TWT request frame and/or a TWT response frame) in IEEE 802.11ax is changed, and a length of the TWT frame in IEEE 802.11ax is increased. A temporary primary 20 MHz location field is added to the TWT frame in IEEE 802.11ax, to indicate a location of a temporary primary channel in a channel whose bandwidth is greater than 160 MHz.

In some feasible implementations, if the first communication device is a STA, the second communication device may be an AP. The TWT frame is a TWT request frame. The STA sends the TWT request frame to the AP, to request one or more of locations of a parking channel and a temporary primary channel of the STA, and an operating bandwidth of the STA. After receiving the TWT request frame, the AP may return a TWT response frame to the STA, to accept or refuse to use information indicated by the TWT request frame for communication, or include modified indication information in the TWT response frame.

In some other feasible implementations, if the first communication device is an AP, the second communication device may be a STA. In an example 1, the TWT frame is a TWT response frame, and before sending the TWT response frame, the AP may receive a TWT request frame sent by the STA. In an example 2, the STA does not need to send a TWT request frame, and the AP directly sends the TWT frame to indicate one or more of locations of a parking channel and a temporary primary channel of the STA, and an operating bandwidth of the STA.

In an example 3, the TWT frame is a TWT response frame. The AP sends the TWT request frame to the STA, to recommend one or more of locations of a parking channel and a temporary primary channel of the STA, and an operating bandwidth of the STA. After receiving a TWT request frame sent by the AP, the STA returns the TWT response frame to the AP, to accept or refuse to use information indicated by the TWT request frame for communication, or include modified indication information in the TWT response frame.

Because data transmission is bidirectional, either the STA or the AP can make a request. The STA and the AP herein are merely schematic diagrams. More broadly, a party that sends a TWT request is referred to as a TWT request STA (which may be an AP or a non-AP STA, collectively referred to as a STA). A party that sends a TWT response is referred to as a TWT response STA.

In some feasible implementations, the first communication device and the second communication device may negotiate, through multiple rounds of interaction, one or more of the location of the parking channel, the location of the temporary primary channel, and the operating bandwidth. For example, after step S202, the first communication device and the second communication device negotiate, through one round of interaction, the channel location of the parking channel, the channel location of the temporary primary channel, or the operating bandwidth, to complete TWT setup.

In this embodiment of this application, on one hand, the channel indication information is carried in the enhanced TWT channel field, so that both a receive end and a transmit end in data transmission know where the parking channel is. In this way, the receive end and the transmit end can accurately obtain signaling of the receive end and the transmit end through the parking 80 MHz channel on which the receive end and the transmit end park, and parse data based on signaling information. This supports PPDU transmission shown in FIG. 2, improves transmission efficiency, and reduces signaling overheads. On the other hand, the temporary primary channel in the 80 MHz parking channel is indicated, to support preamble puncture transmission in a multi-segment EHT-SIG transmission mechanism. In other words, if a part of 20 MHz channels in the 80 MHz parking channel are unavailable (for example, occupied or interfered), and available channels are noncontiguous, two communication parties can still transmit data through another available channel. This improves channel utilization and flexibility.

### Embodiment 3

In this embodiment of this application, a channel switch element field carries channel indication information, to indicate a parking channel and/or an operating bandwidth of a STA in larger bandwidths (for example, 160 MHz, 240 MHz, and 320 MHz).

In some feasible implementations, for ease of description, an example in which an AP is a second communication device and a STA is a first communication device is used below for description.

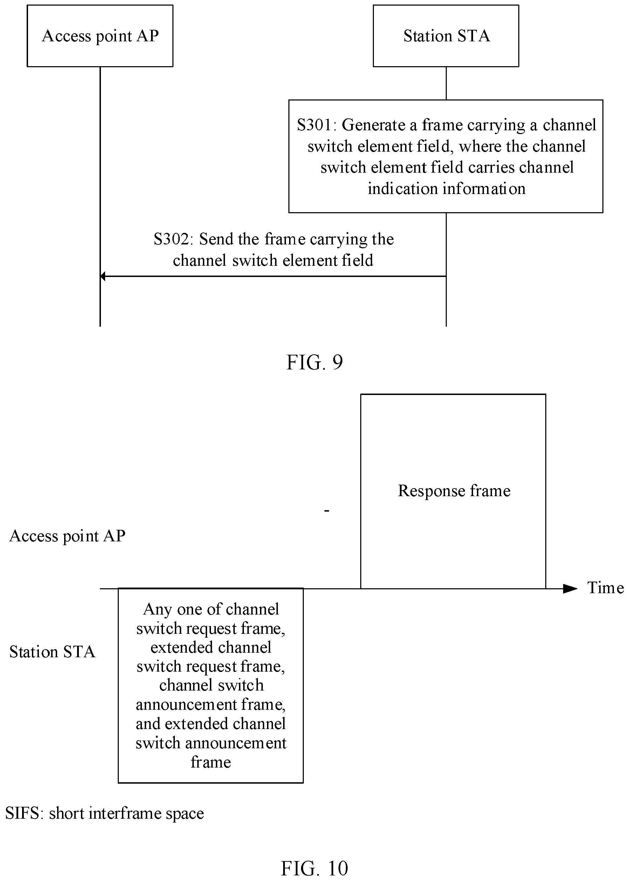

FIG. 9 is a third schematic flowchart of a method for indicating a channel in a wireless local area network according to an embodiment of this application. As shown in FIG. 9, the method for indicating a channel in the wireless local area network provided in this embodiment of this application includes but is not limited to the following steps.

S301: A STA generates a frame carrying a channel switch element field, where the channel switch element field carries channel indication information.

S302: The STA sends the frame carrying the channel switch element field to an AP. Correspondingly, the AP receives the frame carrying the channel switch element field.

Optionally, after receiving the frame carrying the channel switch element field sent by the STA, the AP may return an acknowledgment ACK or a NACK, or a TWT response frame to the STA to accept or reject the request.

Specifically, the STA sends, to the AP, any frame that carries the channel switch element field (channel switch element), where the channel switch element field carries the channel indication information. The channel switch element field may indicate a location of a parking channel and operating bandwidth information that are expected by the STA. The frame carrying the channel switch element field includes: a channel switch request frame, an extended channel switch request frame, a channel switch announcement frame, an extended channel switch announcement frame, and the like. After receiving the any frame that carries the channel switch element field and that is sent by the STA, the AP may return a response frame to the STA, where the response frame is used for accepting or rejecting the location of the parking channel and an operating bandwidth that are expected by the STA. The response frame may be the acknowledgment frame (for example, the ACK or the NAK), the TWT response frame, or the like.

Optionally, refer to FIG. 10. FIG. 10 is a schematic diagram of interaction between the STA and the AP based on the channel switch element according to an embodiment of this application. As shown in FIG. 10, the STA sends any one of the channel switch request frame, the extended channel switch request frame, the channel switch announcement frame, and the extended channel switch announcement frame. After receiving the frame sent by the STA, the AP returns the response frame, to accept or reject the parking channel and the operating bandwidth that are indicated by the STA in the channel switch element field. It may be understood that a bandwidth of the parking channel may be 80 MHz.

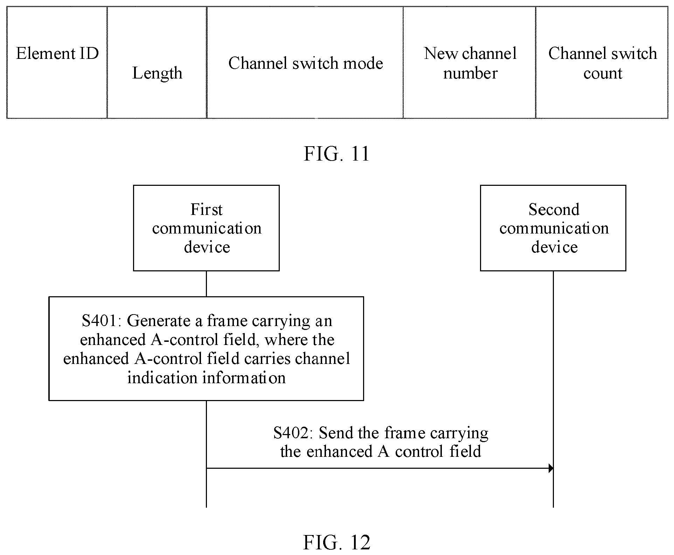

Optionally, refer to FIG. 11. FIG. 11 is a schematic diagram of the channel switch element field according to an embodiment of this application. As shown in FIG. 11, the channel switch element field includes an element identifier, a length, a channel switch mode (channel switch mode), a new channel locationnumber (new channel number), and a channel switch count (channel switch count). The new channel location is the location that is of the parking channel and that is expected by the STA.

Optionally, if the channel switch element field does not indicate the operating bandwidth information expected by the STA, the STA may indicate the operating bandwidth information expected by the STA by using an OMI control field, an operation element field, or the like.

It may be understood that this embodiment of this application is not only applicable to indication of a channel whose bandwidth is greater than 160 MHz, but also applicable to indication of a channel whose bandwidth is less than 160 MHz (for example, 80 MHz) or equal to 160 MHz.

In this embodiment of this application, the new channel location in the channel switch element field in IEEE 802.11ax is reused to indicate the location of the parking channel in the channel whose bandwidth is greater than 160 MHz, so that both a receive end and a transmit end in data transmission know where the parking channel is. In this way, the receive end and the transmit end can accurately obtain signaling of the receive end and the transmit end through a parking 80 MHz channel on which the receive end and the transmit end park, and parse data based on signaling information. This supports PPDU transmission shown in FIG. 2, improves transmission efficiency, and reduces signaling overheads.

### Embodiment 4

In this embodiment of this application, an A-control field (A-Control) carries channel indication information, to indicate a parking channel, a temporary primary channel, and/or an operating bandwidth of a STA in larger bandwidths (for example, 240 MHz and 320 MHz).

FIG. 12 is a fourth schematic flowchart of a method for indicating a channel in a wireless local area network according to an embodiment of this application. As shown in FIG. 12, the method for indicating a channel in the wireless local area network provided in this embodiment of this application includes but is not limited to the following steps.

S401: A first communication device generates a frame carrying an enhanced A-control field, where the enhanced A-control field carries channel indication information.

S402: The first communication device sends the frame carrying the enhanced A-control field to a second communication device. Correspondingly, the second communication device receives the frame carrying the enhanced A-control field.

In some feasible implementations, the first communication device may be an AP, or may be a STA. Correspondingly, the second communication device may be a STA, or may be an AP. If the first communication device is an AP, and the second communication device is a STA, the frame carrying the enhanced A-control field is used for directly indicating or recommending locations of a parking channel and a temporary primary channel of the STA, and/or operating bandwidth information. Optionally, the STA may return a response frame to the AP, to accept or reject indication or suggestion of the AP. If the first communication device is a STA, and the second communication device is an AP, the frame carrying the enhanced A-control field may indicate a location of a parking channel, a location of a temporary primary channel, and/or operating bandwidth information that are/is requested by the STA. Optionally, the AP may also return a response frame to the STA, to accept or reject a request of the STA.

For ease of understanding, an example in which the first communication device is the STA and the second communication device is the AP is used below for description. Specifically, the STA sends any frame that carries the enhanced A-control field to the AP, where the enhanced A-control field may indicate a location of a parking channel, a location of a temporary primary channel, and/or operating bandwidth information that are/is expected by the STA. After receiving the any frame that carries the enhanced A-control field and that is sent by the STA, the AP may return the response frame to the STA, where the response frame is used for accepting or rejecting the location of the parking channel and the operating bandwidth that are expected by the STA. The enhanced A-control field carries the channel indication information, the channel indication information is an enhanced TWT channel field, and the enhanced A-control field may include a control identifier field and an enhanced TWT channel field. For a structure and a meaning of the enhanced TWT channel field, refer to any description in the first feasible implementation to the fourth feasible implementation of the embodiment 2. Details are not described herein again. The enhanced A-control field may be referred to as a parking A-control field. A specific name of the enhanced A-control field is not limited in this embodiment of this application. In this embodiment of this application, the enhanced TWT channel field is extended to the A control field A, so that a manner of carrying the channel indication information can be expanded. This can enrich implementations of the method for indicating a channel in the wireless local area network provided in this application.

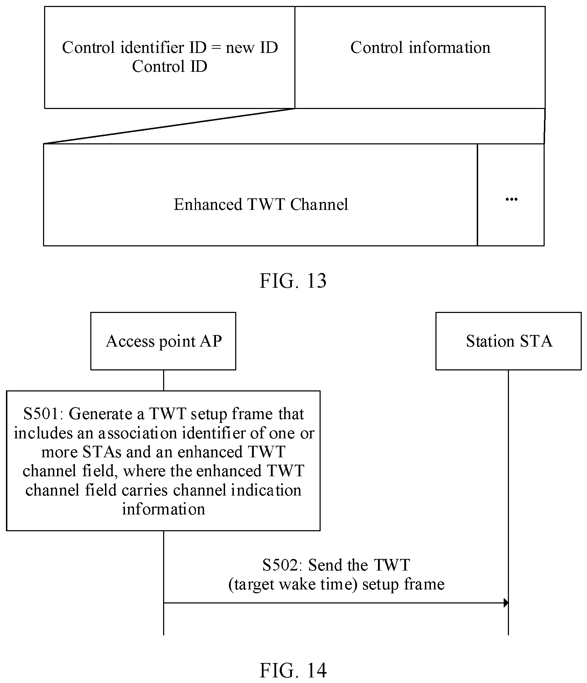

FIG. 13 is a schematic diagram of the enhanced A-control field according to an embodiment of this application. As shown in FIG. 13, an ID that is not used in the 802.1 lax standard, for example, one of 7 to 14, is selected from a control ID of an A-control field (A-control) in IEEE 802.11ax, to identify the enhanced A-control field. Eight bits in a control information field are used as the enhanced TWT channel field.

It may be understood that this embodiment of this application is not only applicable to indication of a channel whose bandwidth is greater than 160 MHz, but also applicable to indication of a channel whose bandwidth is less than 160 MHz (for example, 80 MHz) or equal to 160 MHz.

In this embodiment of this application, a frame structure of the A-control field (A-Control) in IEEE 802.11ax is reused, the channel indication information is carried in the control information field, and the location of the 80 MHz parking channel is indicated, so that both a receive end and a transmit end in data transmission know where the parking channel is. In this way, the receive end and the transmit end can accurately obtain signaling through a parking 80 MHz channel on which the receive end and the transmit end park, and parse data based on signaling information. This supports PPDU transmission shown in FIG. 2, improves transmission efficiency, and reduces signaling overheads. On the other hand, the temporary primary channel in the 80 MHz parking channel is indicated, to support preamble puncture transmission in a multi-segment EHT-SIG transmission mechanism. In other words, if a part of 20 MHz channels in the 80 MHz parking channel are unavailable (for example, occupied or interfered), and available channels are noncontiguous, two communication parties can still transmit data through another available channel. This improves channel utilization and flexibility.

### Embodiment 5

In this embodiment of this application, a broadcast TWT (broadcast TWT) element field carries channel indication information. In addition, a parking channel, a temporary primary channel, or an operating bandwidth is negotiated with one or more STAs by using one TWT element field, to indicate the parking channel, the temporary primary channel, and the operating bandwidth of the one or more STAs in an SST mechanism and/or a multi-segment EHT-SIG transmission mechanism. Different from the embodiment 2 to the embodiment 4, in the embodiment 5, parking channels and temporary primary channels of multiple STAs can be indicated in one interaction, and transmission efficiency in the embodiment 5 is higher.

In some feasible implementations, for ease of description, an example in which an AP is a first communication device and a STA is a second communication device is used below for description.

FIG. 14 is a fifth schematic flowchart of a method for indicating a channel in a wireless local area network according to an embodiment of this application. As shown in FIG. 14, the method for indicating a channel in the wireless local area network in this embodiment of this application includes but is not limited to the following steps.

S501: An AP generates a TWT setup frame that includes an association identifier of one or more STAs and an enhanced TWT channel field, where the enhanced TWT channel field carries channel indication information.

S502: The AP sends the TWT setup frame. Correspondingly, a station receives the TWT setup frame.

In some feasible implementations, the enhanced TWT channel field may indicate one or more of a location of a parking channel, a location of a temporary primary channel, and an operating bandwidth. In an example, the enhanced TWT channel field carries the channel indication information. The association identifier of the one or more STAs may indicate a STA to which information indicated by the enhanced TWT channel field belongs, in other words, indicate locations of a parking channel and a temporary primary channel of the one or more STAs.

In some feasible implementations, the TWT setup frame may be a broadcast frame, and the AP sends the TWT setup frame through broadcast. Correspondingly, after receiving the TWT setup frame, each STA may parse the TWT setup frame. If the STA determines, through parsing, that the TWT setup frame includes a parking channel, a temporary primary channel, and/or operating bandwidth information of the STA, the STA determines whether to accept information indicated by the TWT setup frame, and may wait for the AP to send a response scheduling frame. The response scheduling frame is used for scheduling a STA to which a parking channel is allocated to return a response frame. The AP sends the response scheduling frame. Correspondingly, after receiving the response scheduling frame, the STA waits for one short interframe space (SIFS) and then returns the response frame to the AP.

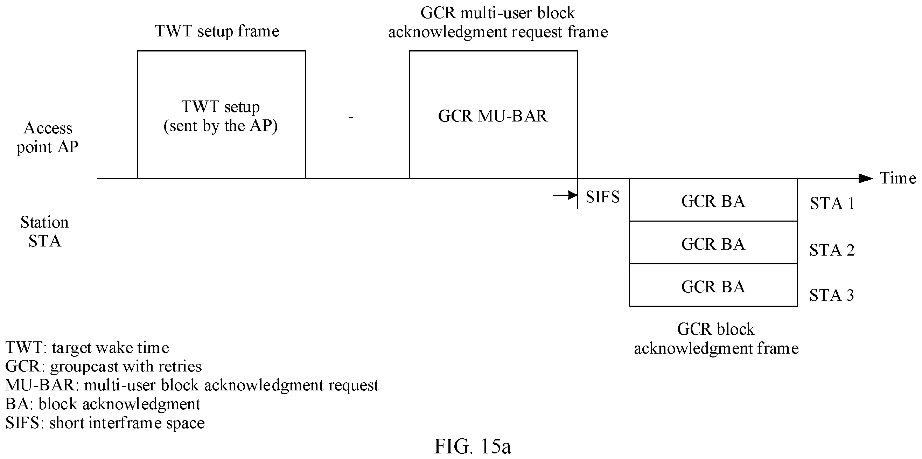

Specifically, if the response schedule frame is a groupcast with retries (groupcast with retries, GCR) multi-user block acknowledgment request (multi-user block acknowledgement request, MU-BAR) frame, the response frame is a GCR block acknowledgment (block acknowledgement, BA) frame. FIG. 15a is a schematic diagram of interaction between the GCRMU-BAR frame and the GCR BA frame according to an embodiment of this application. As shown in FIG. 15a, after sending the TWT setup frame, the AP waits for a period of time, and sends the GCRMU-BAR frame to schedule a STA (such as a STA 1, a STA 2, and a STA 3) to which a parking channel is allocated. The STA waits for one SIFS and then returns the GCR BA frame for acknowledgment. In this embodiment of this application, the GCR MU-BAR/GCR BA frame is used for implementing an acknowledgment procedure between the AP and the STA in a broadcast scenario.

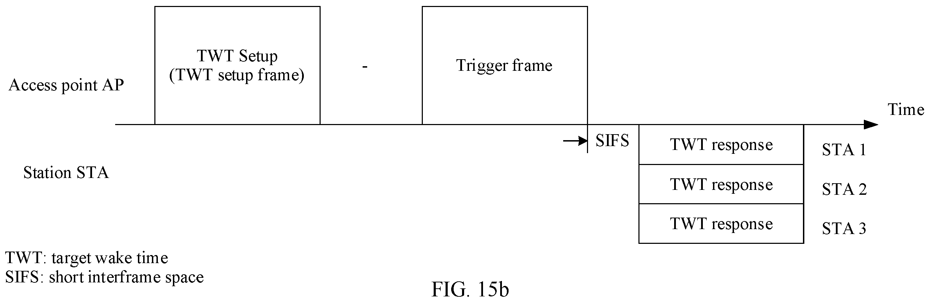

If the response schedule frame is a trigger frame, the response frame is a TWT response frame. FIG. 15b is a schematic diagram of interaction between the trigger frame and the TWT response frame according to an embodiment of this application. As shown in FIG. 15b, after sending the TWT setup frame, the AP waits for a period of time, and sends the trigger frame to schedule a STA (such as a STA 1, a STA 2, and a STA 3) to which a parking channel is allocated. The STA waits for one SIFS and then returns the TWT response frame for acknowledgment. In this embodiment of this application, the trigger frame/TWT response frame is further used for implementing an acknowledgment procedure between the AP and the STA in a broadcast scenario.

In some feasible implementations, a TWT element field in the TWT setup frame may include a TWT parameter information field. The TWT parameter information field may include one or more parking indication information fields (parking indication information). Each parking indication information field includes one enhanced TWT channel field, one STA number field (STA number), and N association identifier fields (association identifier, AID). For a structure and a meaning of the enhanced TWT channel field, refer to any description in the first feasible implementation to the sixth feasible implementation of the embodiment 2 in this application. Details are not described herein again. The STA number field may indicate a number of stations parking on a channel indicated by the enhanced TWT channel field. The association identifier field may indicate an association identifier of a station parking on the channel indicated by the enhanced TWT channel field, and a value of N is equal to a value of the STA number field. It may be understood that, in this embodiment of this application, one or more STAs have one temporary primary channel in one 80 MHz.

Optionally, the TWT element field may further include a parking indication present field. The parking indication present field indicates whether there is a parking indication information field in the TWT parameter information field. Optionally, the parking indication present field may be carried in a reserved bit of the TWT parameter information field.

Optionally, in addition to indicating, by using the parking indication present field, whether there is a parking indication information field, the TWT element field may alternatively be indicated by using a large bandwidth indication field. Specifically, the TWT element field may include the large bandwidth indication field. The large bandwidth indication field indicates whether there is a parking indication information field in the TWT parameter information field. Optionally, the large bandwidth indication field may be carried in a reserved bit of the TWT element field.

Optionally, it is assumed that a first parking indication information field included in a TWT parameter information field corresponds to a first 80 MHz channel, a second parking indication information field corresponds to a second 80 MHz channel, a third parking indication information field corresponds to a third 80 MHz channel, and the rest can be deduced by analogy. In this case, each parking indication information field may include one STA number field and N association identifier fields, but does not include an enhanced TWT channel field. It may be understood that, in this case, one parking indication information field can indicate only an 80 MHz parking channel of one or more STAs. A temporary primary channel may be a 20 MHz channel preset on each 80 MHz channel. For example, the temporary primary channel is a 20 MHz channel with a lowest frequency in each 80 MHz channel. It may be further understood that, if a value of a STA number field included in a specific parking indication information field is 0, it may indicate that no STA parks on an 80 MHz channel corresponding to the parking indication information field.

In this embodiment of this application, for one 80 MHz channel, one parking indication information field may simultaneously indicate a temporary primary channel of N STAs. Further, in this embodiment of this application, temporary primary channels in multiple 80 MHz channels may be indicated by using multiple parking indication information fields.

Optionally, the TWT element field may include the following two frame structures.

### (a) First frame structure of the TWT element field

Specifically, the TWT element field includes an element identifier field (element ID), a length field (length), a control field (control), and a TWT parameter information field. The TWT parameter information field includes a request type field (request type) and one or more parking indication information fields. Each parking indication information field includes an enhanced TWT channel field, a STA number field, and one or more association identifier fields. The request type field includes a parking indication present field (parking indication present), and the parking indication present field may be represented by a reserved bit (reserved) in the request type field. For example, one last reserved bit in the request type field represents the parking indication present field. For example, if a value of the parking indication present field is 1, it indicates that the TWT parameter information field includes the parking indication information field. If a value of the parking indication present field is 0, it indicates that the TWT parameter information field does not include a parking indication information field, or it indicates that a frame structure of the TWT parameter information field is the same as a frame structure of a broadcast TWT parameter information field in IEEE 802.11ax.

Generally, in this embodiment of this application, the following changes are made based on a TWT element field in IEEE 802.11ax: The TWT parameter information field is generally consistent with the broadcast TWT parameter set field (broadcast TWT parameter set field) in IEEE 802.11ax. A difference lies in that a last bit in a request type field (request type) of the original broadcast TWT parameter set field in IEEE 802.11ax is a reserved bit (reserved), and that in this embodiment of this application is the parking indication present field. If the value of the parking indication present field is 0, it may indicate that a frame structure of another part after the request type field is completely consistent with that of the broadcast TWT parameter set field in IEEE 802.11ax. If the value of the parking indication present field is 1, it may indicate that a parking indication information field exists in the frame structure after the request type field, and there may be one or more parking indication information fields.

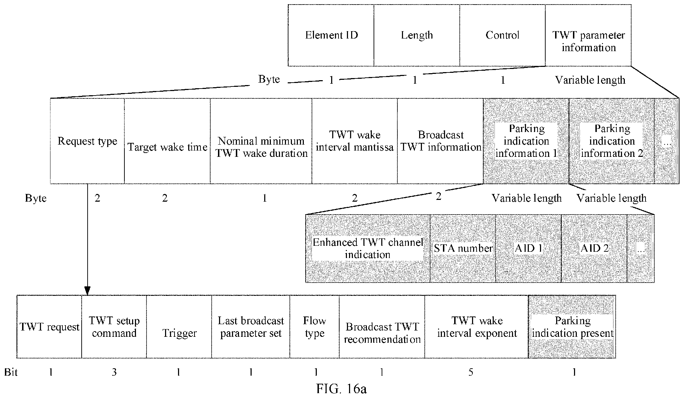

FIG. 16a is a schematic diagram of a broadcast TWT element field according to an embodiment of this application. As shown in FIG. 16a, the broadcast TWT element field includes an element identifier field, a length field, a control field, and a TWT parameter information field. The TWT parameter information field includes a request type field and one or more parking indication information fields. The request type field includes a parking indication present field. The parking indication information field includes an enhanced TWT channel field, a STA number field, and one or more association identifier fields. In this embodiment of this application, a parking indication information field is added to the TWT parameter information field in IEEE 802.11ax, so that the AP simultaneously negotiates the parking channel, the temporary primary channel, or the operating bandwidth with the one or more STAs. The AP does not need to separately send the channel indication information to each STA to negotiate the parking channel, the temporary primary channel, or the operating bandwidth. This reduces signaling overheads on an AP side.

### (b) Second frame structure of the TWT element field

Specifically, the TWT element field includes an element identifier field, a length field, a control field, and a TWT parameter information field. The TWT parameter information field includes one or more parking indication information fields. Each parking indication information field includes an enhanced TWT channel field, a STA number field, and one or more association identifier fields. The control field includes a large bandwidth indication field. The large bandwidth indication field indicates whether there is a parking indication information field in the TWT parameter information field. The large bandwidth indication field may be represented by using a reserved bit (reserved) in the control field. For example, the large bandwidth indication field is represented by using a 1-bit reserved bit in the control field. For example, when a value of the large bandwidth indication field is 1, it indicates that there is a parking indication information field in the TWT parameter information field. When a value of the large bandwidth indication field is 0, it indicates that there is no parking indication information field in the TWT parameter information field.

Generally, in this embodiment of this application, the following changes are made based on a TWT element field in IEEE 802.11ax: First, an original 1-bit reserved bit in IEEE 802.11ax is used as the large bandwidth indication field in the control field. If the value of the large bandwidth indication field is 1, it may indicate that the TWT parameter information field in this embodiment of this application includes one or more parking indication information fields. If the value of the large bandwidth indication field is 0, it may indicate that the TWT parameter information field in this embodiment of this application is consistent with a TWT parameter information field in IEEE 802.11ax.

The large bandwidth indication field may be referred to as a ">160 MHz indication field (>160 MHz indication)". A specific name of the large bandwidth indication field is not limited in this embodiment of this application.

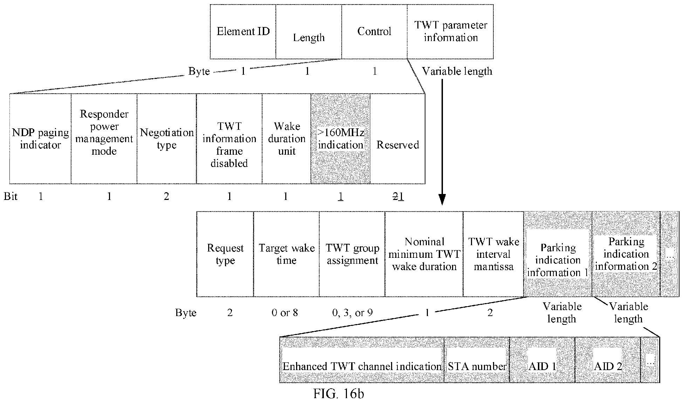

FIG. 16b is a schematic diagram of the TWT element field according to an embodiment of this application. As shown in FIG. 16b, the control field in FIG. 16b includes a ">160 MHz indication field". The TWT parameter information field includes one or more parking indication information fields, and the parking indication information field includes an enhanced TWT channel field, a STA number field, and an association identifier field of one or more stations parking on a channel indicated by the enhanced TWT channel field. The TWT element field in this embodiment of this application is not limited to be in the TWT setup frame, and may alternatively be in another broadcast frame.

In some feasible implementations, if the TWT setup frame indicates only a parking channel, a temporary primary channel, and/or operating bandwidth of one STA, it indicates that the AP negotiates the parking channel, the temporary primary channel, and/or the operating bandwidth with the single STA. In this case, the TWT parameter information field includes a parking indication information field, and the parking indication information field includes a TWT channel field, a STA number field, and an association identifier field (optional field). In addition, a value of the STA number field is 1, and the association identifier field is an ID of one station parking on the parking channel. Optionally, it is assumed that the AP negotiates the parking channel, the temporary primary channel, and/or the operating bandwidth with the single STA. If the AP sends the TWT setup frame to the STA in a unicast manner, the parking indication information field may not include an association identifier field. If the AP sends the TWT setup frame in a broadcast manner, the parking indication information field may include an association identifier field.

In this embodiment of this application, the enhanced TWT channel field and the association identifier of the one or more STAs are carried in the TWT setup frame, to simultaneously indicate the parking channel, the temporary primary channel, and/or the operating bandwidth of the one or more STAs. This improves efficiency. Certainly, in the solution in this embodiment of this application, on one hand, transmission of a segment EHT-SIG may be supported, transmission efficiency is improved, and signaling overheads are reduced. On the other hand, preamble puncture transmission is supported in a data transmission process. In other words, if available frequency domain resource channels are noncontiguous because a part of 20 MHz channels in the 80 MHz channel are unavailable (for example, occupied or interfered), two communication parties can still transmit data through another available channel. This improves channel utilization and flexibility.

### Embodiment 6

In this embodiment of this application, a multiple user request to send (multiple user request to send, MU-RTS) frame carries channel indication information, and a parking channel, a temporary primary channel, or an operating bandwidth is negotiated with one or more STAs by using one or more association identifiers in the MU-RTS frame, to indicate the parking channel, the temporary primary channel, and the operating bandwidth of the one or more STAs in a multi-segment EHT-SIG transmission mechanism.

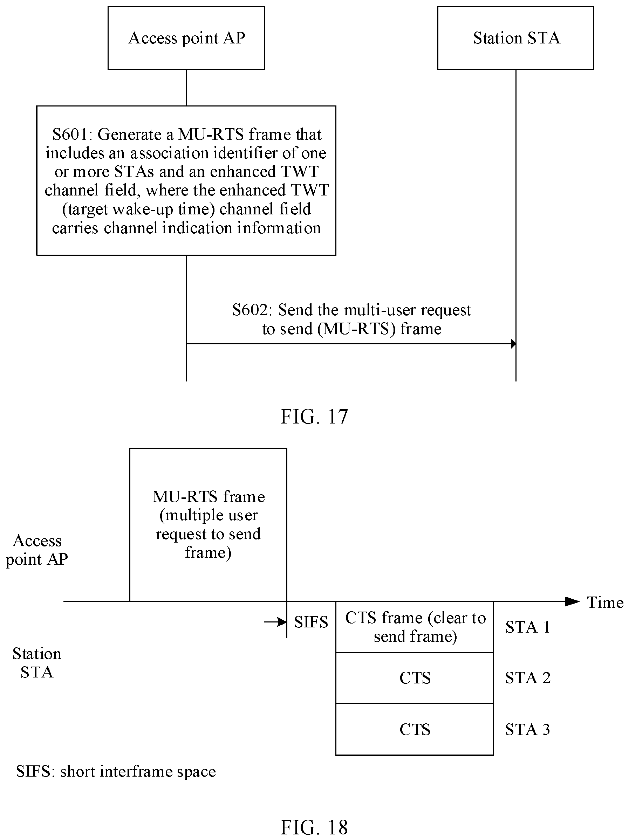

FIG. 17 is a sixth schematic flowchart of a method for indicating a channel in a wireless local area network according to an embodiment of this application. In this embodiment of this application, an example in which a first communication device is an AP and a second communication device is a STA is used for description. As shown in FIG. 17, the method for indicating a channel in the wireless local area network in this embodiment of this application includes but is not limited to the following steps.

S601: An AP generates a MU-RTS frame that includes an association identifier of one or more STAs and an enhanced TWT channel field, where the enhanced TWT channel field carries channel indication information.

S602: The AP sends the MU-RTS frame. Correspondingly, the STAs receive the MU-RTS frame.

Specifically, the AP sends the MU-RTS frame. Correspondingly, after receiving the MU-RTS frame, the STA returns a clear to send (clear to send, CTS) frame to the AP. Because the MU-RTS frame is a special trigger frame (trigger frame, TF), the STA needs to return the CTS frame on a corresponding resource element for acknowledgment. FIG. 18 is a schematic diagram of interaction between the MU-RTS frame and the CTS frame according to an embodiment of this application. As shown in FIG. 18, the AP sends the MU-RTS frame, and the STA returns the CTS frame after a short inter-frame space (short inter-frame space, SIFS) for acknowledgment. In an example, the AP at a transmit end of the MU-RTS frame determines whether the STA returns the CTS, to determine whether channel indication is completed.

In some feasible implementations, the MU-RTS frame includes one common information (common information) field and one or more user information (user information) fields. The common information field in the MU-RTS frame includes a multi-segment indication field (multi-segment indication), and the multi-segment indication field may indicate whether the user information field includes an enhanced TWT channel field. Each user information field in the MU-RTS frame includes an enhanced TWT channel field and an association identifier of one STA. The enhanced TWT channel field may indicate one or more of locations of a parking channel and a temporary primary channel, and an operating bandwidth that are of the STA and that are identified by the association identifier in the user information field. For a structure and a meaning of the enhanced TWT channel field, refer to any description of the first feasible implementation to the sixth feasible implementation in the embodiment 2 of this application. Details are not described herein again. In an example, the enhanced TWT channel field carries the channel indication information.

Generally, for the MU-RTS frame, if the multi-segment indication field is set to 0, it may indicate that a subsequent frame structure of the MU-RTS frame in this embodiment of this application is completely consistent with that in IEEE 802.11ax. If the multi-segment indication field is set to 1, it may indicate that a corresponding modification (namely, an enhanced TWT channel field) of the user information field takes effect.

Optionally, the multi-segment indication field may be represented by a part of unused fields in the common information field in the MU-RTS frame. The enhanced TWT channel field may be represented by using a part of unused fields in the user information field in the MU-RTS frame.

Optionally, in this embodiment of this application, one reserved bit may be selected from the common information field in the MU-RTS frame, and reused as the multi-segment indication field. In this embodiment of this application, 8 reserved bits may be selected from the user information field in the MU-RTS frame, and reused as the enhanced TWT channel field.

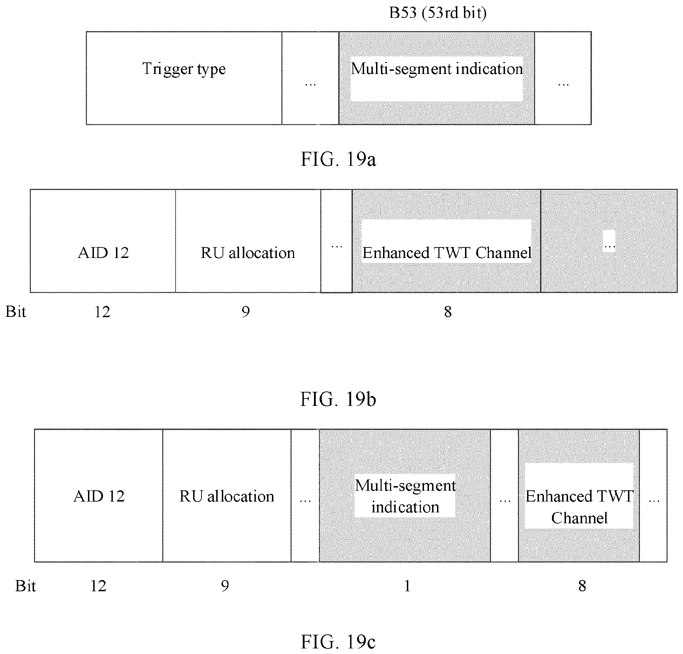

FIG. 19a is a schematic diagram of the common information field in the MU-RTS frame according to an embodiment of this application. As shown in FIG. 19a, a trigger type (trigger type) in the common information field is not changed, and a 1-bit reserved bit in the common information field is reused as the multi-segment indication field. If the multi-segment indication field is set to 0, it indicates that the user information field in the MU-RTS frame does not include the enhanced TWT channel field. If the multi-segment indication field is set to 1, it indicates that the user information field in the MU-RTS frame includes the enhanced TWT channel field. It may be understood that a correspondence between a value and a meaning of the multi-segment indication field is not limited in this embodiment of this application.

Optionally, a new value is introduced into the trigger type field of the common information field in the MU-RTS frame, to indicate that the MU-RTS frame has a new trigger type (trigger type), for example, a trigger frame carrying information indicating a parking channel.

FIG. 19b is a first schematic diagram of the user information field in the MU-RTS frame according to an embodiment of this application. As shown in FIG. 19b, 8 reserved bits in the user information field are reused as the enhanced TWT channel field. It may be understood that the 8 reserved bits in the user information field may be 8 consecutive bits. This reduces complexity of parsing the MU-RTS frame by the STA.

In some other feasible implementations, a user information field in the MU-RTS frame includes a multi-segment indication field and an enhanced TWT channel field. Both the multi-segment indication field and the enhanced TWT channel field may be represented by using a part of unused fields in the user information field in the MU-RTS frame. A length of the multi-segment indication field may be 1 bit, and a length of the enhanced TWT channel field may be 8 bits. For a structure and a meaning of the enhanced TWT channel field, refer to any description of the first feasible implementation to the fourth feasible implementation in the embodiment 2 of this application. Details are not described herein again.

FIG. 19c is a second schematic diagram of the user information field in the MU-RTS frame according to an embodiment of this application. As shown in FIG. 19c, the user information field includes a 1-bit multi-segment indication field, an 8-bit enhanced TWT channel field, and another field (for details, refer to FIG. 19c). The multi-segment indication field and the enhanced TWT channel field may be consecutive or inconsecutive.

In this embodiment of this application, an MU-RTS frame structure and an MU-RTS/CTS acknowledgment procedure in IEEE 802.11ax are reused, but the common information field and/or the user information field in the MU-RTS frame are/is changed, to indicate a temporary primary channel, a parking channel, and/or an operating bandwidth of one or more STAs in a larger bandwidth (for example, 160 MHz, 240 MHz, and 320 MHz), and improve efficiency.

### Embodiment 7

In this embodiment of this application, a new trigger frame/action frame/MAC frame carries channel indication information, and a parking channel, a temporary primary channel, or an operating bandwidth is negotiated with one or more STAs by using one or more association identifiers in the new trigger frame/action frame/MAC frame, to indicate the parking channel, the temporary primary channel, or the operating bandwidth of the one or more STAs in a multi-segment EHT-SIG transmission mechanism.

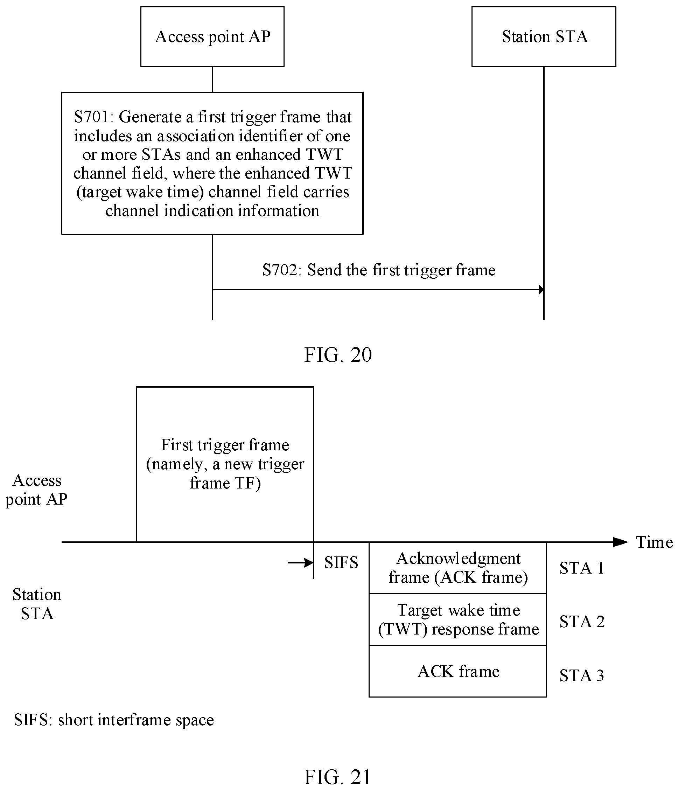

FIG. 20 is a seventh schematic flowchart of a method for indicating a channel in a wireless local area network according to an embodiment of this application. In this embodiment of this application, an example in which an AP is a first communication device and a STA is a second communication device is used for description. As shown in FIG. 20, the method for indicating a channel in the wireless local area network in this embodiment of this application includes but is not limited to the following steps.

S701: An AP generates a first trigger frame that includes an association identifier of one or more STAs and an enhanced TWT channel field, where the enhanced TWT channel field carries channel indication information.

S702: The AP sends the first trigger frame. Correspondingly, the STAs receive the first trigger frame.

Specifically, the AP sends the first trigger frame. Correspondingly, after receiving the first trigger frame, the STA returns an ACK frame or a TWT response frame to the AP. The first trigger frame may be a trigger frame of a new trigger type, and the first trigger frame includes one common information field and one or more user information fields. FIG. 21 is a schematic diagram of interaction between the first trigger frame and the response frame according to an embodiment of this application. As shown in FIG. 21, an AP sends the first trigger frame (namely, a new trigger frame), and the STA returns the ACK frame or the TWT response frame for acknowledgment after waiting for a SIFS. Optionally, after receiving the first trigger frame, the STA may send, for acknowledgment, the ACK frame or the TWT response frame on a 20 MHz channel indicated in the user information field in the first trigger frame.

Optionally, the first trigger frame may indicate a parking channel, a temporary primary channel, and/or an operating bandwidth of the STA. The trigger type (trigger type) of the first trigger frame is different from a trigger type of a trigger frame in IEEE 802.11ax. The first trigger frame may be referred to as a parking indication trigger frame. A specific name of the first trigger frame is not limited in this embodiment of this application.

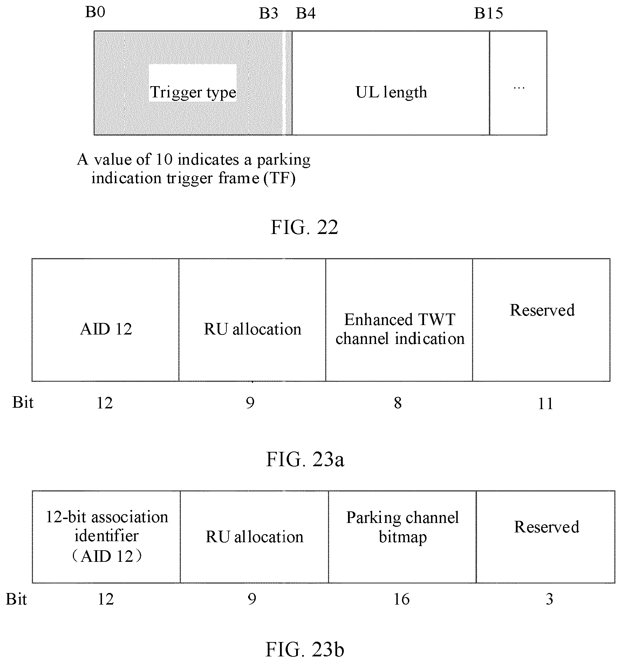

FIG. 22 is a schematic diagram of the common information field in the first trigger frame according to an embodiment of this application. As shown in FIG. 22, a new value meaning is introduced into a trigger type field included in a common information field in a trigger frame (which herein refers to a trigger frame in IEEE 802.11ax). For example, a value of 10 of the field indicates that the trigger frame is a parking indication trigger frame.

Optionally, each user information field in the first trigger frame may include an enhanced TWT channel field and an association identifier of one STA. The enhanced TWT channel field may indicate one or more of locations of a parking channel and a temporary primary channel, and an operating bandwidth that are of the STA and that are identified by the association identifier in the user information field. If a length of the enhanced TWT channel field is 1 byte, namely, 8 bits, for a structure and a meaning of the enhanced TWT channel field, refer to any description in the first feasible implementation to the fourth feasible implementation of the embodiment 2. If a length of the enhanced TWT channel field is 2 bytes, namely, 16 bits, for a structure and a meaning of the enhanced TWT channel field, refer to any description in the fifth feasible implementation and the sixth feasible implementation of the embodiment 2.

FIG. 23a is a first schematic diagram of the user information field in the first trigger frame according to an embodiment of this application. As shown in FIG. 23a, the user information field includes a 12-bit association identifier, 9-bit resource element allocation, an 8-bit enhanced TWT channel indication field, and 11-bit reserved bits. FIG. 23b is a second schematic diagram of the user information field in the first trigger frame according to an embodiment of this application. As shown in FIG. 23b, the user information field includes a 12-bit association identifier, a 9-bit resource element allocation, a 16-bit parking channel bitmap field, and 3-bit reserved bits. The parking channel bitmap field is an enhanced TWT channel field.

In this embodiment of this application, the new trigger frame carries the channel indication information, a meaning is independent and clear, and a parking channel, a temporary primary channel, and/or operating bandwidth of one or more STAs can be indicated.

In an optional embodiment, in this embodiment of this application, a new action frame and an element field carry channel indication information, and a parking channel, a temporary primary channel, or an operating bandwidth is negotiated with one or more STAs by using one or more association identifiers in the new action frame, to indicate the parking channel, the temporary primary channel, or the operating bandwidth of the one or more STAs in a multi-segment EHT-SIG transmission mechanism. In this embodiment of this application, an example in which an AP is a first communication device and a STA is a second communication device is used for description.

Specifically, the AP sends a first frame that includes an association identifier of one or more STAs and an enhanced TWT channel field, where the enhanced TWT channel field carries channel indication information. After receiving the first frame, a STA returns a response frame corresponding to the first frame to the AP.

In some feasible implementations, the first frame is a new action frame (action frame). For ease of description, the new action frame is referred to as a first action frame below. The first action frame (action frame) may indicate a parking channel, a temporary primary channel, and/or an operating bandwidth of the one or more STAs. Elements included in the first action frame are shown in the following table 8. A first element in the table 8 is a category field (category), and the field is an element that each action frame needs to have. A second element in the table 8 is a type field (optional), and the field indicates that an action of the first action frame is one of setup, teardown, and information update. A third element in the table 8 is a token field (optional), and the field indicates which time multi-segment EHT-SIG configuration information is matched for setup, removal, and update between the AP and the STA. A fourth element in the table 8 is a multi-segment EHT-SIG information element field. The multi-segment EHT-SIG information element field indicates the parking channel, the temporary primary channel, and/or the operating bandwidth of the one or more STAs.

**Table 8: Description of elements in a first action frame**

| Order | Information |
|---|---|
| 1 | Category (category) |
| 2 | Type (optional)/Type (optional) |
| | 0: Setup Setup |
| | 1: Teardown Teardown |
| | 3: Update Update |
| 3 | Token (optional)/Token (optional) |
| 4 | Multi-segment EHT-SIG information/Multi-segment EHT-SIG information |

Optionally, the multi-segment EHT-SIG information element field may include a multi-segment EHT-SIG set field. The multi-segment EHT-SIG set field may include one or more parking indication information fields. For a structure and a meaning of the parking indication information field, refer to corresponding description of the parking indication information field in the embodiment 5 of this application. Details are not described herein again. The multi-segment EHT-SIG information element field may also be referred to as an enhanced SST element field. A specific name of the multi-segment EHT-SIG information element field is not limited in this embodiment of this application.

Optionally, the multi-segment EHT-SIG set field may further include a start parking time field and a parking duration field, which respectively indicate a time at which the AP expects the STA starts to park and parking duration.

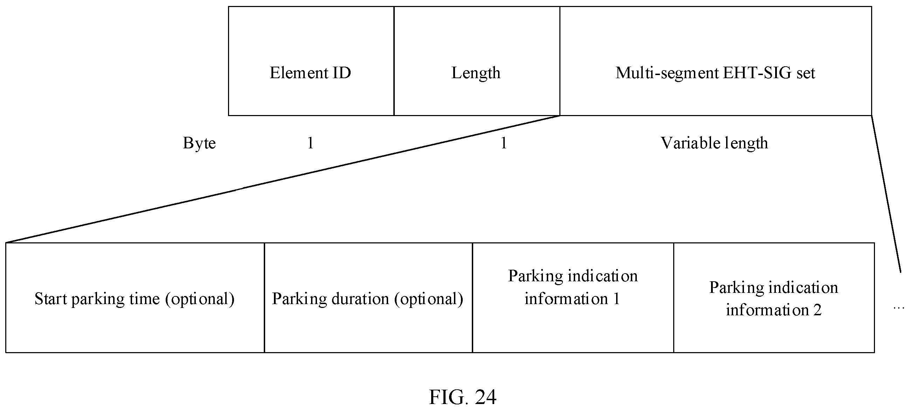

FIG. 24 is a schematic diagram of the multi-segment EHT-SIG information element field according to an embodiment of this application. As shown in FIG. 24, the multi-segment EHT-SIG information element field includes an element identifier, a length, and a multi-segment EHT-SIG set field, and the multi-segment EHT-SIG set field includes a start parking time field (start parking time), a parking duration field (parking duration), and one or more parking indication information fields.

Optionally, it is assumed that the first action frame indicates only a parking channel, a temporary primary channel, and/or an operating bandwidth of one STA, in other words, the AP negotiates with a single STA about the parking channel, the temporary primary channel, and/or the operating bandwidth. In this case, the STA may perform acknowledgment by using a TWT response frame or a CTS frame, in other words, the STA returns the TWT response frame or the CTS frame to the AP. It is assumed that the first action frame indicates parking channels, temporary primary channels, and/or operating bandwidths of multiple STAs, in other words, the AP simultaneously negotiates with the multiple STAs about the parking channel, the temporary primary channel, and/or the operating bandwidth. In this case, the AP may schedule, by using a GCR MU-BAR frame, the STA to return a GCR BA frame for acknowledgment, or the AP triggers, by using a trigger frame, the STA to return a TWT response frame for acknowledgment. In other words, after receiving the GCR MU-BAR frame, the STA returns the GCR BA frame to the AP; or after receiving the trigger frame, the STA returns the TWT response frame to the AP.

In some other feasible implementations, the first frame may be a new media access control (media access control, MAC) frame. For ease of description, the new MAC frame is referred to as a first MAC frame below. The first MAC frame indicates a parking channel, a temporary primary channel, and/or an operating bandwidth of one or more STAs. The first MAC frame may include a multi-segment EHT-SIG set field. The multi-segment EHT-SIG set field may include one or more parking indication information fields. For a structure and a meaning of the parking indication information field, refer to corresponding description of the parking indication information field in the embodiment 3 of this application. Details are not described herein again.

Optionally, a method for acknowledging the first MAC frame is similar to a method for acknowledging the first action frame. It is assumed that the first MAC frame indicates only a parking channel, a temporary primary channel, and/or an operating bandwidth of one STA, in other words, the AP negotiates with a single STA about the parking channel, the temporary primary channel, and/or the operating bandwidth. In this case, the STA may perform acknowledgment by using a TWT response frame or a CTS frame. It is assumed that the first MAC frame indicates parking channels, temporary primary channels, and/or operating bandwidths of multiple STAs, in other words, the AP simultaneously negotiates with the multiple STAs about the parking channel, the temporary primary channel, and/or the operating bandwidth. In this case, the AP may schedule, by using a GCR MU-BAR frame, the STA to return a GCR BA frame for acknowledgment, or the AP triggers, by using a trigger frame, the STA to return a TWT response frame for acknowledgment.

In this embodiment of this application, the new action frame or MAC frame carries the channel indication information, a meaning is independent and clear, and the parking channel, the temporary primary channel, or the operating bandwidth of the one or more STAs can be indicated in a multi-segment EHT-SIG transmission mechanism.

### Embodiment 8

An embodiment of this application further provides a method for indicating puncture information, to indicate preamble puncture (preamble puncture) information of larger bandwidths (for example, 240 MHz and 320 MHz) in an EHT-SIG of an 80 MHz frequency segment, to support preamble puncture transmission in IEEE 802.11be. It may be understood that the method for indicating puncture information provided in this embodiment of this application may be used in combination with any one of the embodiment 1 to the embodiment 7. For example, after a parking channel and a temporary primary channel are indicated in any one of the foregoing implementations, a channel puncture indication may be sent by using the method in this embodiment of this application. It may be further understood that the puncture indication method provided in this embodiment of this application may also be separately used. This is not limited in this embodiment of this application.

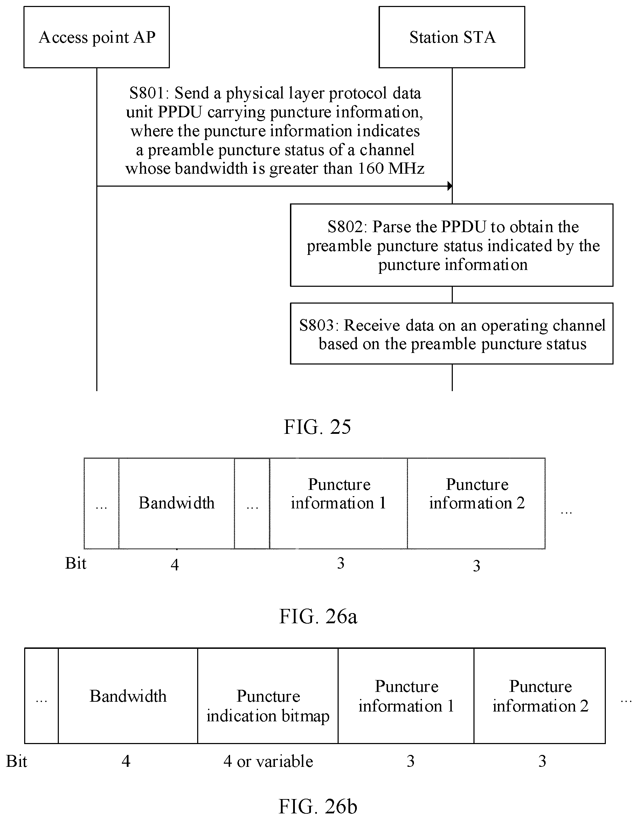

FIG. 25 is a schematic flowchart of a method for indicating puncture information according to an embodiment of this application. FIG. 25 shows an example in which an AP is a first communication device and a STA is a second communication device. The method for indicating puncture information provided in this embodiment of this application includes but is not limited to the following steps.

S801: An AP sends a physical layer protocol data unit PPDU carrying puncture information, where the puncture information indicates a preamble puncture status of a channel whose bandwidth is greater than 160 MHz. Correspondingly, a STA receives the PPDU.

S802: The STA parses the PPDU to obtain the preamble puncture status indicated by the puncture information.

S803: The STA receives data on an operating channel based on the preamble puncture status.

In some feasible implementations, the AP sends the PPDU (physical layer protocol data unit) carrying the puncture information. Correspondingly, after receiving the PPDU, the STA may parse the PPDU to obtain a preamble puncture status indicated by the puncture information, and may receive the data on the operating channel based on the preamble puncture status.

Specifically, the puncture information may indicate the preamble puncture (preamble puncture) status (including a puncturing pattern) of the channel whose bandwidth is greater than 160 MHz. The puncture information may be included in a universal signal field (universal signal field, U-SIG), or may be included in an EHT signaling field (EHT-SIG), or a part of the puncture information may be included in a U-SIG, and the other part may be included in an EHT-SIG. This is not limited in this embodiment of this application.

FIG. 26a is a first schematic diagram of the puncture information according to an embodiment of this application. As shown in FIG. 26a, the puncture information includes one bandwidth field and one or more puncture information fields. The bandwidth field indicates a bandwidth size of a data packet, and each puncture information field indicates a puncturing pattern of one 80 MHz channel. Each puncture information field may be represented by using 3 bits, and the bandwidth field is represented by using 4 bits. It may be understood that a length of each field in the puncture information is not limited in this embodiment of this application. It may be further understood that the bandwidth field and the puncture information field in FIG. 26a may be inconsecutive, or may be located at different locations. For example, the bandwidth field is located in the U-SIG, and the puncture information field is located in the EHT-SIG.

FIG. 26b is a second schematic diagram of the puncture information according to an embodiment of this application. As shown in FIG. 26b, the puncture information includes one bandwidth field, one puncture indication bitmap field, and one or more puncture information fields. The bandwidth field indicates a bandwidth size of a data packet, the puncture indication bitmap field indicates a location of an 80 MHz channel on which preamble puncture is performed, and each puncture information field indicates a puncturing pattern on one 80 MHz channel. The bandwidth field may be represented by using 4 bits, and each puncture information field may be represented by using 3 bits. The puncture indication bitmap field may be represented by using fixed 4 bits, or bits whose number is equal to a number of 80 MHz included in all bandwidths. For example, if all bandwidths are 240 MHz, a length of the puncture indication bitmap field is 240/80=3 bits. It may be understood that a length of each field in the puncture information is not limited in this embodiment of this application. It may be further understood that the bandwidth field and the puncture information field in FIG. 26b may be inconsecutive, or may be located at different locations. For example, the bandwidth field and the puncture indication bitmap field are located in the U-SIG, and the puncture information field is located in the EHT-SIG.

Optionally, a bit that is set to 1 in the puncture indication bitmap field indicates that preamble puncture exists in an 80 MHz channel corresponding to the bit that is set to 1. A bit that is set to 0 indicates that preamble puncture does not exist in an 80 MHz channel corresponding to the bit that is set to 0. In other words, data transmission can be performed through all 20 MHz in the 80 MHz channel corresponding to the set that is set to 0. Optionally, a number of puncture information fields is equal to a number of puncture indication bitmap fields whose values are 1. For example, 80 MHz with a lowest frequency in all bandwidths is used as first 80 MHz, and each 80 MHz with an increasing frequency is successively used as second 80 MHz, third 80 MHz, and the rest can be deduced by analogy. If a length of the puncture indication bitmap field is 4 bits, and a value of the puncture indication bitmap field is 0100, it indicates that preamble puncture exists in the third 80 MHz channel, and preamble puncture does not exist in the first, second, and fourth 80 MHz channels. For another example, if a value of the puncture indication bitmap field is 1010, it indicates that preamble puncture exists in the second 80 MHz channel and the fourth 80 MHz channel, and preamble puncture does not exist in the first 80 MHz channel and the third 80 MHz channel.

It may be understood that if values of bits in the puncture indication bitmap field are all 0s (for example, 0000), it indicates that no channel is preamble punctured in this case. In this case, the puncture information may not include a puncture information field, or the puncture information includes 0 puncture information fields in this case, or the puncture information includes one bandwidth field and one puncture indication bitmap field.

For values and meanings of the puncture information fields shown in FIG. 26a and FIG. 26b, refer to the following table 9. It may be understood that the table 9 is merely an example for description. In actual application, the values and the meanings of the puncture information field may be a part of or all of entries listed in the table 9.

**Table 9: Description of meanings of values of an 80 MHz puncture information field**

| Value | Meaning: puncturing pattern (X indicates puncturing, and 1 indicates no puncturing) |
|---|---|
| 0 | X111 |
| 1 | 1X11 |
| 2 | 11X1 |
| 3 | 111X |
| 4 | XX11 |
| 5 | 11XX |
| 6 | XXXX |
| 7 | Reserved |

In some other feasible implementations, the puncture information may further indicate a puncturing pattern in one 160 MHz channel. For values and meanings of the puncture information field, refer to a partial bandwidth mode of preamble puncture in IEEE 802.11ax, or refer to the following table 10.

**Table 10: Description of meanings of values of a 160 MHz puncture information field**

| Value | Meaning: puncturing pattern (X indicates puncturing, and 1 indicates no puncturing) |
|---|---|
| 0 | X111 1111 |
| 1 | 1X11 1111 |
| 2 | 11X1 1111 |
| 3 | 111X 1111 |
| 4 | 1111 X111 |
| 5 | 1111 1X11 |
| 6 | 1111 11X1 |
| 7 | 1111 111X |
| 8 | XX11 1111 |
| 9 | 11XX 1111 |
| 10 | 1111 XX11 |
| 11 | 1111 11XX |
| 12 | 1111 XXXX |
| 13 | XXXX 1111 |
| 14-15 | Reserved |

In this embodiment of this application, the preamble puncture (preamble puncture) information of larger bandwidths (for example, 240 MHz and 320 MHz) in the EHT-SIG and/or the U-SIG of the 80 MHz frequency segment is indicated, to implement preamble puncture transmission in IEEE 802.11be.

The foregoing content describes in detail the methods provided in this application. To better implement the foregoing solutions in embodiments of this application, embodiments of this application further provide corresponding apparatuses or devices.

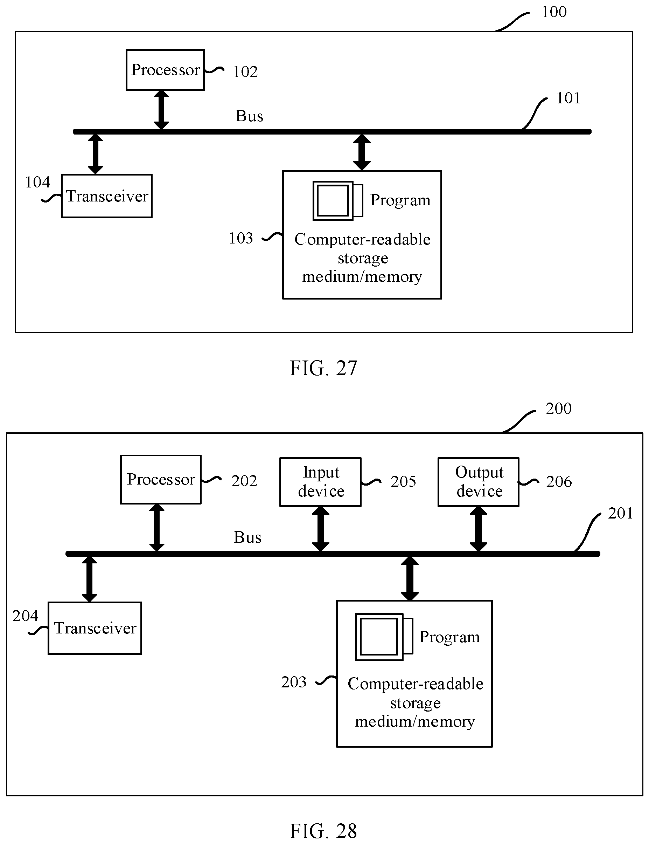

FIG. 27 is a schematic diagram of a structure of a communication apparatus according to an embodiment of this application. Due to a difference in integration, the communication apparatus 100 may include one or more of components shown in FIG. 27, and may be configured to perform the method or the steps related to the first communication device in the foregoing embodiments. Components shown in FIG. 27 may include a processor 102, a computer-readable storage medium/memory 103, a transceiver 104, and a bus 101. The processor, the transceiver, the computer-readable storage medium, and the like are connected through the bus. A specific connection medium between the foregoing components is not limited in this embodiment of this application.

In an example, the communication apparatus 100 may be an entire device, to implement the method in the foregoing embodiments. For example, the device may include a processor, a transceiver, and the like. In another example, the communication apparatus 100 may be a chip system or a processing system, and is applied to an entire device to control the entire device to implement the method in the foregoing embodiments. The chip system or the processing system may further include a processor, and optionally, may further include a computer-readable storage medium/memory.

In a possible implementation, the communication apparatus 100 may be configured as the first communication device (for example, the AP or the STA in FIG. 3) in the foregoing wireless communication system. The communication apparatus 100 may perform the method and the steps related to the first communication device in any one of the foregoing embodiments.

For example, the transceiver 104 may be configured to support the first communication device in communicating with the second communication device in the foregoing embodiments, and may perform receiving and sending processes related to the first communication device in FIG. 5, FIG. 6, FIG. 9, FIG. 12, FIG. 14, FIG. 17, FIG. 20, or FIG. 25 and/or another process used for the technology described in this application.

For example, the transceiver 104 may be configured to perform S102 in FIG. 5, S202 in FIG. 6, S402 in FIG. 12, S502 in FIG. 14, S602 in FIG. 17, S702 in FIG. 20, or S801 in FIG. 25. For another example, the transceiver 104 may be configured to receive the frame carrying the channel switch element field in S302 in FIG. 9. Certainly, the transceiver 104 may be further configured to perform another process and method of the technology described in this application.

The processor 102 is configured to control and manage an action of the first communication device, and is configured to perform processing performed by the first communication device in the foregoing embodiments. The processor 102 may perform a processing process related to the first communication device in FIG. 5, FIG. 6, FIG. 9, FIG. 12, FIG. 14, FIG. 17, FIG. 20, or FIG. 25 and/or another process used for the technology described in this application. The processor 102 may be responsible for managing the bus and may execute a program or instructions stored in the memory. For example, the processor 102 may be configured to generate the information or the frame sent in S102, S202, S402, S502, S602, S702 or S801, and may be configured to parse the information or the frame received in S302. Certainly, the processor 102 may be further configured to perform another process and method of the technology described in this application.

Optionally, the communication apparatus 100 includes the computer-readable storage medium/memory 103. The computer-readable storage medium/memory 103 stores a program, instructions, or data for performing the technical solutions of this application. For example, the computer-readable storage medium/memory 103 may include instructions sufficient to allow the communication apparatus 100 to perform the methods and functions in any one of the foregoing embodiments.

Optionally, the communication apparatus 100 may include an input/output device, for example, a display or a keyboard light.

In another possible implementation, the communication apparatus 100 may be configured as a chip or a processing system in the first communication device (for example, the AP or the STA in FIG. 3) in the foregoing wireless communication system. An entire device on which the chip or the processing system is installed may perform the method and the steps related to the first communication device in any one of the foregoing embodiments.

The communication apparatus 100 includes the processor, and optionally, further includes the computer-readable storage medium/memory 103. The computer-readable storage medium/memory 103 stores a program, instructions, or data for performing the technical solutions of this application. For example, the computer-readable storage medium/memory 103 may include instructions sufficient to allow the communication apparatus 100 to perform the methods and functions in any one of the foregoing embodiments. For example, the processor reads and runs the instructions, and controls the apparatus on which the processing system is installed to implement the method and the steps related to the first communication device in any one of the foregoing embodiments.

Optionally, the processor may include a processing circuit and a communication interface circuit. The processing circuit may be configured to generate the information or the frame sent in S102, S202, S402, S502, S602, or S702, and may be configured to parse the information or the frame received in S302. Certainly, the processing circuit may be further configured to perform another process and method of the technology described in this application. The communication interface circuit may be configured to output information generated by the processing circuit, and may further be applied to input information or instructions received by a device in a memory to the processing circuit for processing.

Optionally, the computer-readable storage medium/memory 103 may be an internal memory located inside the processor, or may be an external memory located outside the processor and coupled to the processor.

It may be understood that FIG. 27 merely shows a simplified design of the communication apparatus 100. During actual application, the communication apparatus 100 may include any quantity of transceivers, processors, memories, and the like. All communication apparatuses 100 that can implement this application fall within the protection scope of this application.

FIG. 28 is another schematic diagram of a structure of a communication apparatus according to an embodiment of this application. Due to a difference in integration, the communication apparatus 200 may include one or more of components shown in FIG. 28, and may be configured to perform the method or the steps related to the second communication device in the foregoing embodiments. Components shown in FIG. 28 may include a processor 202, a computer-readable storage medium/memory 203, a transceiver 204, an input device 205, an output device 206, and a bus 201. The processor, the transceiver, the computer-readable storage medium, the input device, the output device, and the like are connected by using the bus. A specific connection medium between the foregoing components is not limited in this embodiment of this application.

In an example, the communication apparatus 200 may be an entire device, to implement the method in the foregoing embodiment. For example, the device may include a processor, a transceiver, an input/output device, and the like. In another example, the communication apparatus 200 may be a chip system or a processing system, and is applied to an entire device to control the entire device to implement the method in the foregoing embodiments. Further, the chip system or the processing system may include the processor, and optionally, may further include the computer-readable storage medium/memory.

In a possible implementation, the communication apparatus 200 may be configured as the second communication device (the AP or the STA in FIG. 3) in the foregoing wireless communication system.

The transceiver 204 may be configured to support the second communication device in communicating with the first communication device, and may perform a communication or interaction process related to the second communication device in FIG. 5, FIG. 6, FIG. 9, FIG. 12, FIG. 14, FIG. 17, FIG. 20, or FIG. 25 and/or another process used for the technology described in this application. For example, the transceiver 204 may be configured to receive the information in S102 in FIG. 5, S202 in FIG. 6, S302 in FIG. 9, or S402 in FIG. 12. For another example, the transceiver 204 may be further configured to receive the information or the frame in S502 in FIG. 14, S602 in FIG. 17, S702 in FIG. 20, or S801 in FIG. 25.

The processor 202 is configured to control and manage an action of the second communication device, is configured to perform processing performed by the STA in the foregoing embodiments, may perform a processing process related to the second communication device in FIG. 5, FIG. 6, FIG. 9, FIG. 12, FIG. 14, FIG. 17, FIG. 20, or FIG. 25, may be responsible for managing the bus, and may execute a program or instructions stored in the memory. For example, the processor 202 may be configured to parse the information or the frame received in S502, S602, S702, or S801, and may generate the information or the frame in S102, S202, S302, or S402. For another example, the processor 202 may be further configured to perform step S802 and step S803. Certainly, the processor 202 may be further configured to perform another process and method of the technology described in this application.

Optionally, the computer-readable storage medium/memory 203 stores a program, instructions, and data for performing the technical solutions of this application. For example, the computer-readable storage medium/memory 203 may include instructions sufficient to allow the communication apparatus 200 to perform a function of the station in any one of the foregoing embodiments.

Optionally, the communication apparatus 200 may further include an input device 205 and an output device 206. The input device 205 and the output device 206 may be a display screen, a keyboard, an audio interface, or the like.

In another possible implementation, the communication apparatus 200 may be configured as a chip or a processing system in the second communication device in the foregoing wireless communication system. An entire device on which the chip or the processing system is installed may perform the method and the steps related to the second communication device in any one of the foregoing embodiments.

The communication apparatus 200 includes the processor, and optionally, further includes the computer-readable storage medium/memory 203. The computer-readable storage medium/memory 203 stores a program, instructions, or data for performing the technical solutions of this application. For example, the computer-readable storage medium/memory 203 may include instructions sufficient to allow the apparatus 200 to perform the methods and functions in any one of the foregoing embodiments. For example, the processor reads and runs the instructions, and controls the apparatus on which the processing system is installed to implement the method and the steps related to the STA in any one of the foregoing embodiments.

Optionally, the processor may include a processing circuit and a communication interface circuit. The processing circuit may be configured to generate the information or the frame sent in S102, S202, S302, or S402, may be configured to parse the information or the frame received in S502, S602, S702, or S801, and may further perform step S802 and step S803. Certainly, the processing circuit may be further configured to perform another process and method of the technology described in this application. The communication interface circuit is configured to output information generated by the processing circuit, and may further be applied to input information or instructions received by a device in a memory to the processing circuit for processing.

Optionally, the computer-readable storage medium/memory 203 may be an internal memory located inside the processor, or may be an external memory located outside the processor and coupled to the processor.

It may be understood that FIG. 28 merely shows a simplified design of the communication apparatus 200. During actual application, the communication apparatus 200 may include any quantity of transceivers, processors, memories, and the like. All communication apparatuses 200 that can implement this application fall within the protection scope of the present invention.

The processor in the apparatus 100 or the apparatus 200 may be a general-purpose processor such as a general-purpose central processing unit (CPU), a network processor (Network Processor, NP for short), or a microprocessor, or may be an application-specific integrated circuit (application-specific integrated circuit, ASIC for short), or one or more integrated circuits configured to control program execution in the solutions of this application. The processor may be alternatively a digital signal processor (Digital Signal Processor, DSP for short), a field programmable gate array (Field Programmable Gate Array, FPGAfor short) or other programmable logic device, discrete gate or transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations according to program instructions stored in the memory.

The computer-readable storage medium/memory may further store an operating system and another application program. Specifically, the program may include program code, and the program code includes computer operation instructions. More specifically, the memory may be a read-only memory (read-only memory, ROM for short), another type of static storage device that can store static information and instructions, a random access memory (random access memory, RAM for short), another type of dynamic storage device that can store information and instructions, a disk memory, or the like. The memory may be a combination of the foregoing storage types. In addition, the computer-readable storage medium/memory may be located in the processor, or may be located outside the processor, or distributed in multiple entities including the processor or a processing circuit. The computer-readable storage medium/memory may be specifically embodied in a computer program product. For example, the computer program product may include a computer-readable medium in a packaging material.

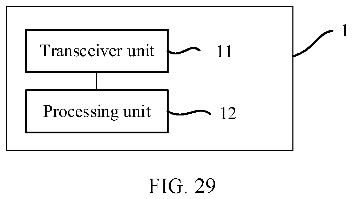

FIG. 29 is a schematic diagram of a structure of an apparatus for indicating a channel according to an embodiment of this application. As shown in FIG. 29, the apparatus 1 for indicating a channel may include a transceiver unit 11 and a processing unit 12.

In a possible implementation, the apparatus 1 for indicating a channel may be configured as the first communication device in the embodiment 1, the embodiment 2, or the embodiment 4, or a chip system or a chip in the first communication device. The apparatus 1 for indicating a channel may perform the method and the steps related to the first communication device in any one of the embodiment 1, the embodiment 2, and the embodiment 4.

For example, the transceiver unit 11 may be configured to support the first communication device in communicating with the second communication device in the embodiment 1, the embodiment 2, and the embodiment 4, and may perform a receiving and sending process related to the first communication device in FIG. 5, FIG. 6, or FIG. 12 and/or another process used for the technology described in this application.

In an example, the transceiver unit 11 may be configured to send channel indication information, a TWT frame, or a frame carrying an enhanced A-control field. For structures of the channel indication information, the TWT frame, and the enhanced A-control field, refer to descriptions in the foregoing corresponding embodiments. For example, the transceiver unit may be configured to perform S102, S202, or S402. The processing unit is configured to generate signaling or data input or output by the transceiver unit, for example, generate the information or the frame in S101, S201, or S401.

In another possible implementation, the apparatus 1 for indicating a channel may be configured as the second communication device in the embodiment 1, the embodiment 2, or the embodiment 4, or a chip system or a chip in the second communication device. The apparatus 1 for indicating a channel may perform the method and steps related to the second communication device in any one of the embodiment 1, the embodiment 2, and the embodiment 4.

For example, the transceiver unit 11 may be configured to support the second communication device in communicating with the first communication device in the embodiment 1, the embodiment 2, and the embodiment 4, and may perform a receiving and sending process related to the second communication device in FIG. 5, FIG. 6, or FIG. 12 and/or another process used for the technology described in this application.

In an example, the transceiver unit 11 may be configured to receive channel indication information, a TWT frame, or a frame carrying an enhanced A-control field. For structures of the channel indication information, the TWT frame, and the enhanced A-control field, refer to descriptions in the foregoing corresponding embodiments. For example, the transceiver unit may be configured to receive the information or the frame in S102, S202, or S402. The processing unit is configured to parse signaling or data input or output by the transceiver unit, for example, parse the information or the frame in S102, S202, or S402.

In still another possible implementation, the apparatus 1 for indicating a channel may be configured as an AP (for example, the AP in FIG. 3) in the foregoing wireless communication system, or a chip system or a chip in the AP. The apparatus 1 for indicating a channel may perform the method and the steps related to the AP in any one of the foregoing embodiments.

For example, the transceiver unit 11 may be configured to support the AP in communicating with one or more STAs in the foregoing embodiments, and may perform receiving and sending processes of the AP in the embodiment 1 to the embodiment 8 and/or another process of the technology described in this application.

In an example, the transceiver unit 11 may be configured to send channel indication information, or may be configured to send puncture information. For structures of various frames of the channel indication information and the puncture information, refer to the descriptions in the foregoing embodiments. The processing unit 12 may be configured to generate or process signaling or data information.

In yet another possible implementation, the apparatus 1 for indicating a channel may be configured as a STA (for example, any one of the STA 1 and the STA 2 in FIG. 3) in the foregoing wireless communication system, or a chip system or a chip in the STA. The apparatus 1 for indicating a channel may perform the method and the steps related to the STA in any one of the foregoing embodiments.

For example, the transceiver unit may be configured to support the STA in communicating with the AP in the foregoing embodiments, and may perform receiving and sending processes related to the STA in the embodiment 1 to the embodiment 8 and/or another process used for the technology described in this application.

In an example, the transceiver unit 11 may be configured to send channel indication information, or may be configured to receive puncture information. For structures of various frames of the channel indication information and the puncture information, refer to the descriptions in the foregoing embodiments. The processing unit 12 is configured to generate or process signaling or data information. For example, the processing unit performs step S802 and step S803.

For example, the apparatus 1 for indicating a channel may be a chip or a chip system, the transceiver unit 11 in the chip or the chip system may be an input/output interface, and the processing unit 12 may be a processing circuit. In the foregoing embodiments, "send" may be "output", and "receive" may be "input". Therefore, the input/output interface completes signaling or data interaction, and the processing circuit completes signaling or data information generation and processing.

Optionally, the apparatus 1 for indicating a channel may be further coupled to a memory. The memory stores instructions. When the processing circuit runs the instructions, the channel indication apparatus 1 is enabled to perform the method and the steps in any embodiment in the foregoing embodiments. For example, the memory may be a storage unit included in the apparatus 1 for indicating a channel, or may be an external storage unit outside the apparatus 1 for indicating a channel.

An embodiment of this application further provides a chip system. The chip system includes a processor, configured to support a first communication device or a second communication device in implementing a function in any one of the foregoing embodiments, for example, generating or processing data and/or information in the foregoing methods. In a possible design, the chip system may further include a memory. The memory is configured to store program instructions and data that are necessary for a transmit end or a receive end. When the processor runs the program instructions, a device on which the chip system is installed is enabled to perform the method in any one of the foregoing embodiments. The chip system may include a chip, or may include a chip and another discrete component.

An embodiment of this application further provides a processor, configured to be coupled to a memory. The memory stores instructions. When the processor runs the instructions, the processor is enabled to perform the method and the functions related to the first communication device or the second communication device in any one of the foregoing embodiments. An embodiment of this application further provides a computer program product including instructions. When the computer program product runs on a computer, the computer is enabled to perform the method and the functions of the first communication device or the second communication device in any one of the foregoing embodiments. An embodiment of this application further provides a computer-readable storage medium. The readable storage medium stores instructions. When a processor runs the instructions, the processor is enabled to perform the method and the functions related to the first communication device or the second communication device in any one of the foregoing embodiments. An embodiment of this application further provides an apparatus, configured to perform the method and the function that are related to the receive end or the transmit end in any one of the foregoing embodiments.

An embodiment of this application further provides a wireless communication system. The system includes the first communication device and at least one second communication device in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application.

## Claims

1. A method for indicating a channel in a wireless local area network, comprising:
generating (S601), by an access point (AP), a media access control, MAC, frame; and
sending (S602), by the access point, the MAC frame to one or more stations (STA1, STA2, STA3), wherein
the MAC frame comprises channel indication information, the channel indication information indicates locations of a parking channel and a temporary primary channel of the one or more stations; and the parking channel comprises the temporary primary channel, a bandwidth of the parking channel is 80 MHz, and a bandwidth of the temporary primary channel is 20 MHz; and
wherein the MAC frame is a multiple user request to send, MU-RTS, frame.

2. The method according to claim 1, wherein the method further comprises:
sending, by the access point (AP), a physical layer protocol data unit, PPDU, wherein the PPDU carries signaling information of the one or more stations (STA1, STA2, STA3), and the signaling information of the one or more stations (STA1, STA2, STA3) is carried on the parking channel.

3. A method for indicating a channel in a wireless local area network, comprising:
receiving, by a first station (STA1, STA2, STA3), a media access control, MAC, frame from an access point (AP), wherein the MAC frame comprises channel indication information, and the channel indication information indicates locations of a parking channel and a temporary primary channel of one or more stations (STA1, STA2, STA3); and
parsing, by the first station (STA1, STA2, STA3), the MAC frame, to obtain locations that are of a parking channel and a temporary primary channel of the first station (STA1, STA2, STA3) and that are indicated by the channel indication information, wherein
the parking channel comprises the temporary primary channel, a bandwidth of the parking channel is 80 MHz, and a bandwidth of the temporary primary channel is 20 MHz; and
wherein the MAC frame is a multiple user request to send, MU-RTS, frame.

4. The method according to claim 3, wherein the method further comprises:
receiving, by the first station (STA1, STA2, STA3), a physical layer protocol data unit, PPDU, from the access point (AP), wherein the PPDU carries signaling information of the first station (STA1, STA2, STA3), and the signaling information of the first station (STA1, STA2, STA3) is carried on the parking channel of the first station (STA1, STA2, STA3).

5. The method according to any one of claims 1 to 4, wherein the channel indication information comprises a temporary primary channel location field, and the temporary primary channel location field indicates the location of the temporary primary channel of the one or more station (STA1, STA2, STA3).

6. The method according to any one of claims 1 to 5, wherein the channel indication information further comprises a parking channel location field, and the parking channel location field indicates the location of the parking channel of the one or more station (STA1, STA2, STA3).

7. The method according to any one of claims 1 to 6, wherein the channel indication information further comprises an operating bandwidth indication field indicating an operating bandwidth of the one or more station (STA1, STA2, STA3).

8. The method according to claim 7, wherein the operating bandwidth of the station (STA1, STA2, STA3) comprises any one of 40 MHz, 80 MHz, 160 MHz, 240 MHz, or 320 MHz.

9. The method according to any one of claims 1 to 8, wherein the MAC frame further comprises a channel information present indication, indicating whether the channel indication information exists in the MAC frame.

10. A communication apparatus (100, 200), comprising a processor (102, 202) and a memory (103, 203), wherein the memory (103, 203) is configured to store instructions; and when the processor (102, 202) runs the instructions, the communication apparatus is enabled to perform the method according to any one of claims 1 to 9.

11. A chip or a chip system, comprising an input/output interface and a processing circuit, wherein the input/output interface is configured to exchange information or data, and the processing circuit is configured to run instructions, to enable an apparatus installed with the chip or the chip system to perform the method according to any one of claims 1 to 9.

12. A computer-readable storage medium, wherein the computer-readable storage medium stores program instructions; and when the program instructions are run on a processor (102, 202), a communication apparatus (100, 200) comprising the processor (102, 202) is caused to perform the method in any one of claims 1 to 9.

## Patentansprüche

1. Verfahren zum Anzeigen eines Kanals in einem drahtlosen lokalen Netzwerk, umfassend:
Erzeugen (S601) eines Medienzugangssteuerungs(media access control, MAC)-Rahmens durch einen Zugangspunkt (access point, AP); und
Senden (S602) des MAC-Rahmens an eine oder mehrere Stationen (STA1, STA2, STA3) durch den Zugangspunkt, wobei der MAC-Rahmen Kanalanzeigeinformationen umfasst, die Kanalanzeigeinformationen Standorte eines Parkkanals und eines temporären primären Kanals der einen oder der mehreren Stationen anzeigen; und der Parkkanal den temporären primären Kanal umfasst, eine Bandbreite des Parkkanals 80 MHz ist und eine Bandbreite des temporären primären Kanals 20 MHz ist; und
wobei der MAC-Rahmen ein Mehrfachbenutzersendeanforderungs(multiple user request to send, MU-RTS)-Rahmen ist.

2. Verfahren nach Anspruch 1, wobei das Verfahren ferner Folgendes umfasst:
Senden einer Protokolldateneinheit einer physikalischen Schicht (physical layer protocol data unit, PPDU) durch den Zugangspunkt (AP), wobei die PPDU Signalübertragungsinformationen der einen oder der mehreren Stationen (STA1, STA2, STA3) enthält und die Signalübertragungsinformationen der einen oder der mehreren Stationen (STA1, STA2, STA3) auf dem Parkkanal enthalten sind.

3. Verfahren zum Anzeigen eines Kanals in einem drahtlosen lokalen Netzwerk, umfassend:
Empfangen eines Medienzugangssteuerungs(MAC)-Rahmens von einem Zugangspunkt (AP) durch eine erste Station (STA1, STA2, STA3), wobei der MAC-Rahmen Kanalanzeigeinformationen umfasst und die Kanalanzeigeinformationen Standorte eines Parkkanals und eines temporären primären Kanals einer oder mehrerer Stationen (STA1, STA2, STA3) anzeigen; und
Analysieren des MAC-Rahmens durch die erste Station (STA1, STA2, STA3), um Standorte zu erhalten, die von einem Parkkanal und einem temporären primären Kanal der ersten Station (STA1, STA2, STA3) sind und die durch die Kanalanzeigeinformationen angezeigt werden, wobei
der Parkkanal den temporären primären Kanal umfasst, eine Bandbreite des Parkkanals 80 MHz ist und eine Bandbreite des temporären primären Kanals 20 MHz ist; und
wobei der MAC-Rahmen ein Mehrfachbenutzersendeanforderungs(multiple user request to send, MU-RTS)-Rahmen ist.

4. Verfahren nach Anspruch 3, wobei das Verfahren ferner Folgendes umfasst:
Empfangen einer Protokolldateneinheit einer physikalischen Schicht (PPDU) von dem Zugangspunkt (AP) durch die erste Station (STA1, STA2, STA3), wobei die PPDU Signalübertragungsinformationen der ersten Station (STA1, STA2, STA3) enthält und die Signalübertragungsinformationen der ersten Station (STA1, STA2, STA3) auf dem Parkkanal der ersten Station (STA1, STA2, STA3) enthalten sind.

5. Verfahren nach einem der Ansprüche 1 bis 4, wobei die Kanalanzeigeinformationen ein Feld für einen temporären primären Kanalstandort umfassen und das Feld für einen temporären primären Kanalstandort den Standort des temporären primären Kanals der einen oder der mehreren Stationen (STA1, STA2, STA3) anzeigt.

6. Verfahren nach einem der Ansprüche 1 bis 5, wobei die Kanalanzeigeinformationen ferner ein Feld für einen Parkkanalstandort umfassen und das Feld für einen Parkkanalstandort die Position des Parkkanals der einen oder der mehreren Stationen (STA1, STA2, STA3) anzeigt.

7. Verfahren nach einem der Ansprüche 1 bis 6, wobei die Kanalanzeigeinformationen ferner ein Betriebsbandbreitenanzeigefeld umfassen, das eine Betriebsbandbreite der einen oder der mehreren Stationen (STA1, STA2, STA3) anzeigt.

8. Verfahren nach Anspruch 7, wobei die Betriebsbandbreite der Station (STA1, STA2, STA3) eines von 40 MHz, 80 MHz, 160 MHz, 240 MHz oder 320 MHz umfasst.

9. Verfahren nach einem der Ansprüche 1 bis 8, wobei der MAC-Rahmen ferner eine Anzeige für ein Vorhandensein von Kanalinformationen umfasst, die anzeigt, ob die Kanalanzeigeinformationen in dem MAC-Rahmen vorliegen.

10. Kommunikationsvorrichtung (100, 200), umfassend einen Prozessor (102, 202) und einen Speicher (103, 203), wobei der Speicher (103, 203) dazu konfiguriert ist, Anweisungen zu speichern; und, wenn der Prozessor (102, 202) die Anweisungen ausführt, es der Kommunikationsvorrichtung ermöglicht wird, das Verfahren nach einem der Ansprüche 1 bis 9 durchzuführen.

11. Chip oder Chipsystem, umfassend eine Eingabe-/Ausgabeschnittstelle und eine Verarbeitungsschaltung, wobei die Eingabe-/Ausgabeschnittstelle dazu konfiguriert ist, Informationen oder Daten auszutauschen, und die Verarbeitungsschaltung dazu konfiguriert ist, Anweisungen auszuführen, um es einer Vorrichtung, die mit dem Chip oder dem Chipsystem installiert ist, zu ermöglichen, das Verfahren nach einem der Ansprüche 1 bis 9 durchzuführen.

12. Computerlesbares Speichermedium, wobei das computerlesbare Speichermedium Programmanweisungen speichert; und, wenn die Programmanweisungen auf einem Prozessor (102, 202) ausgeführt werden, eine Kommunikationsvorrichtung (100, 200), umfassend den Prozessor (102, 202), dazu veranlasst wird, das Verfahren nach einem der Ansprüche 1 bis 9 durchzuführen.

## Revendications

1. Procédé d'indication d'un canal dans un réseau local sans fil, comprenant :
la génération (S601), par un point d'accès (AP), d'une trame de contrôle d'accès au support, MAC ; et
l'envoi (S602), par le point d'accès, de la trame MAC à une ou plusieurs stations (STA1, STA2, STA3), dans lequel
la trame MAC comprend des informations d'indication de canal, les informations d'indication de canal indiquent les emplacements d'un canal de stationnement et d'un canal primaire temporaire des une ou plusieurs stations ; et le canal de stationnement comprend le canal primaire temporaire, une bande passante du canal de stationnement est de 80 MHz et une bande passante du canal primaire temporaire est de 20 MHz ; et
dans lequel la trame MAC est une trame de demande d'envoi multi-utilisateurs (MU-RTS).

2. Procédé selon la revendication 1, dans lequel le procédé comprend également :
l'envoi, par le point d'accès (AP), d'une unité de données de protocole de couche physique, PPDU, dans lequel la PPDU transporte des informations de signalisation des une ou plusieurs stations (STA1, STA2, STA3), et les informations de signalisation des une ou plusieurs stations (STA1, STA2, STA3) sont transportées sur le canal de stationnement.

3. Procédé d'indication d'un canal dans un réseau local sans fil, comprenant :
la réception, par une première station (STA1, STA2, STA3), d'une trame de contrôle d'accès au support (MAC) provenant d'un point d'accès (AP), dans lequel la trame MAC comprend des informations d'indication de canal, et les informations d'indication de canal indiquent les emplacements d'un canal de stationnement et d'un canal primaire temporaire d'une ou de plusieurs stations (STA1, STA2, STA3) ; et
l'analyse, par la première station (STA1, STA2, STA3), de la trame MAC, pour obtenir les emplacements qui sont d'un canal de stationnement et d'un canal primaire temporaire de la première station (STA1, STA2, STA3) et qui sont indiqués par les informations d'indication de canal, dans lequel
le canal de stationnement comprend le canal primaire temporaire, une bande passante du canal de stationnement est de 80 MHz, et une bande passante du canal primaire temporaire est de 20 MHz ; et
dans lequel la trame MAC est une trame de demande d'envoi multi-utilisateurs (MU-RTS).

4. Procédé selon la revendication 3, dans lequel le procédé comprend également :
la réception, par la première station (STA1, STA2, STA3), d'une unité de données de protocole de couche physique (PPDU) du point d'accès (AP), dans lequel la PPDU transporte des informations de signalisation de la première station (STA1, STA2, STA3), et les informations de signalisation de la première station (STA1, STA2, STA3) sont transportées sur le canal de stationnement de la première station (STA1, STA2, STA3).

5. Procédé selon l'une quelconque des revendications 1 à 4, dans lequel les informations d'indication de canal comprennent un champ d'emplacement de canal primaire temporaire, et le champ d'emplacement de canal primaire temporaire indique l'emplacement du canal primaire temporaire des une ou plusieurs stations (STA1, STA2, STA3).

6. Procédé selon l'une quelconque des revendications 1 à 5, dans lequel les informations d'indication de canal comprennent également un champ d'emplacement de canal de stationnement, et le champ d'emplacement de canal de stationnement indique l'emplacement du canal de stationnement des une ou plusieurs stations (STA1, STA2, STA3).

7. Procédé selon l'une quelconque des revendications 1 à 6, dans lequel les informations d'indication de canal comprennent également un champ d'indication de bande passante de fonctionnement indiquant une bande passante de fonctionnement des une ou plusieurs stations (STA1, STA2, STA3).

8. Procédé selon la revendication 7, dans lequel la bande passante de fonctionnement de la station (STA1, STA2, STA3) comprend l'une des valeurs suivantes : 40 MHz, 80 MHz, 160 MHz, 240 MHz ou 320 MHz.

9. Procédé selon l'une quelconque des revendications 1 à 8, dans lequel la trame MAC comprend également une indication de présence d'informations de canal, indiquant si les informations d'indication de canal existent dans la trame MAC.

10. Appareil de communication (100, 200), comprenant un processeur (102, 202) et une mémoire (103, 203), dans lequel la mémoire (103, 203) est configurée pour stocker des instructions ; et lorsque le processeur (102, 202) exécute les instructions, l'appareil de communication est activé pour réaliser le procédé selon l'une quelconque des revendications 1 à 9.

11. Puce ou système de puce, comprenant une interface d'entrée/sortie et un circuit de traitement, dans lequel l'interface d'entrée/sortie est configurée pour échanger des informations ou des données, et le circuit de traitement est configuré pour exécuter des instructions, pour activer un appareil équipé de la puce ou du système de puce pour réaliser le procédé selon l'une quelconque des revendications 1 à 9.

12. Support de stockage lisible par ordinateur, dans lequel le support de stockage lisible par ordinateur stocke des instructions de programme ; et lorsque les instructions de programme sont exécutées sur un processeur (102, 202), un appareil de communication (100, 200) comprenant le processeur (102, 202) est amené à réaliser le procédé selon l'une quelconque des revendications 1 à 9.
